# EUROPEAN PATENT APPLICATION

(11) **EP 4 506 156 A1**
(43) Date of publication of application: **12.02.2025**
(21) Application number: 23779771.7
(22) Date of filing: 17.03.2023
(51) Int. Cl.: B32B 5/26, B29B 11/16, B32B 7/09, D04H 3/04

(54) **FIBER-REINFORCED SUBSTRATE**

(30) Priority: 29.03.2022 JP 2022053636
(71) Applicant: Teijin Limited, Osaka 530-0005 (JP)
(72) Inventor: OSAKI, Kohei, Osaka-shi, Osaka 530-0005 (JP); NAKAGAWA, Hiroki, Osaka-shi, Osaka 530-0005 (JP)
(74) Representative: Carpmaels & Ransford LLP
(86) International application number: PCT/JP2023/010677
(87) International publication number: WO 2023/189755

(57) **Abstract**

The present invention provides a reinforcing fiber substrate having a resin material layer containing thermoplastic resin fibers, wherein the occurrence of microcracks caused by the resin material layer is reduced; and the present invention relates to a reinforcing fiber substrate 30 comprising one or more reinforcing fiber layers 330, 340, 350 comprising reinforcing fibers, one or more resin material layers 310 to 316 comprising thermoplastic resin fibers, and auxiliary yarns, wherein the auxiliary yarns maintain the integrity of the reinforcing fiber layer and/or the reinforcing fiber substrate by connecting the reinforcing fibers and/or the reinforcing fiber layers to each other, and wherein the mean fiber diameter of the thermoplastic resin fibers is 0.5 µm to 35 µm.

## Description

### [Technical Field]

The present invention relates to a reinforcing fiber substrate. In particular, the present invention relates to a reinforcing fiber substrate, a preform material comprising the reinforcing fiber substrate, and a fiber-reinforced resin composite material comprising the reinforcing fiber substrate.

### [Background Art]

A fiber-reinforced resin composite material (also referred to as a fiber-reinforced composite material or a composite) is lightweight, high strength, and high rigidity, and therefore is used in a wide range of fields, for example, sports and leisure applications such as fishing rods and golf shafts, and industrial applications such as automobiles and aircraft. As a method for molding a fiber-reinforced resin composite material, in addition to a method of molding a prepreg (intermediate substrate) formed by impregnating a reinforcing fiber substrate with a resin in advance and shaping it into a sheet, there is also a method in which a reinforcing fiber substrate disposed in a mold is impregnated with a liquid resin (i.e., an uncured curable resin or a molten thermoplastic resin) and then cured or solidified to obtain a fiber-reinforced resin composite material (a resin transfer molding method, RTM method).

A reinforcing fiber substrate often has a plurality of reinforcing fiber layers, in particular a plurality of reinforcing fiber sheets. Examples of the reinforcing fiber layer include woven fabrics in which reinforcing fibers as warp yarns and weft yarns are woven by plain weaving or satin weaving, etc. In such a woven fabric, for example, reinforcing fibers as warp yarns and reinforcing fibers as weft yarns extend orthogonally to each other.

In contrast, a unidirectional (UD) reinforcing fiber layer can be used in which reinforcing fibers are aligned in one direction. Such unidirectional reinforcing fiber layers include unidirectional fabric (UD-woven fabric). The unidirectional woven fabric is a woven fabric composed of reinforcing fibers as warp yarns aligned in one direction and auxiliary yarns as weft yarns, and is a so-called "sudare"-blind woven fabric.

Further, a non-crimp fabric can also be used for a reinforcing fiber substrate. In the non-crimp fabric, a plurality of reinforcing fiber layers consisting of reinforcing fibers aligned in one direction are laminated, and the laminated reinforcing fiber layers are stitched together with a stitch yarn as an auxiliary yarn. In other words, in the non-crimp fabric, a laminate of reinforcing fiber sheets consisting of reinforcing fibers aligned in one direction is integrated by being stitched together with an auxiliary yarn (in particular, referred to as a stitch yarn) penetrating the laminate in the thickness direction.

When a fiber-reinforced resin composite material is produced from these reinforcing fiber substrates having an auxiliary yarn, microcracks may occur in some cases. In particular, it is known that microcracks occur around stitch yarns as auxiliary yarns. Microcracks may expand slowly to reduce mechanical properties of a fiber-reinforced composite material. Various studies have been made to suppress the occurrence of such microcracks.

Patent Literature 1 describes an intermediate article in which at least two layers of unidirectional reinforcing fibers are joined together by a sewing yarn or a knitting yarn, and describes a sewing yarn or a knitting yarn having a count of 30 dTex or less:

Patent Literature 2 discloses a stitched reinforcing fiber substrate in which reinforcing fiber sheets made of reinforcing fibers are stitched up with a stitch yarn, and that the coefficient of linear expansion of the stitch yarn in the fiber axial direction after being heated at 180°C for 2 hours and cooled is -1×10⁻⁶ to 70×10⁻⁶/K.

Patent Literature 3 also discloses a stitched reinforcing fiber substrate in which reinforcing fiber sheets made of reinforcing fibers are stitched up with a stitch yarn. This document also describes a stitch yarn to which an organic compound having a polar group is attached.

Non-Patent Literature 1 discloses reducing a resin rich portion in a fiber-reinforced composite material as much as possible to improve the toughness of the interface between a stitch yarn and a matrix resin, so as to suppress the formation of microcracks.

The reinforcing fiber substrate may also include a resin material layer comprising thermoplastic resin fibers. For such a resin material layer, for example, a nonwoven fabric comprising thermoplastic resin fibers can be disposed on a reinforcing fiber layer and/or between reinforcing fiber layers (refer to, for example, Patent Literature 2). Such a resin material layer, which is also referred to as a veil or a reinforcing veil, can improve the impact resistance of a reinforcing fiber substrate.

Patent Literature 4 describes use of a binder in the form of a nonwoven fabric, wherein the binder being made of polyamide having a melting point of 165°C or higher and 180°C or lower. According to this document, the impact resistance and the microcrack resistance of a fiber-reinforced composite material obtained by combining reinforcing fibers can be improved.

### [Citation List]

### [Patent Literature]

[PTL 1] JP 2012-511450 JP
[PTL 2] WO2021/172246A
[PTL 3] WO2021/172247A
[PTL 4] WO2021/241734A

### [Non Patent Literature]

[NPL 1] Pierre-Jacques Liotier et al., Composites: Part A 42 (2011), 425-437

### [Technical Problem]

As described above with respect to the prior art, microcracks can be reduced through a selection of an auxiliary yarn. However, in a reinforcing fiber substrate having a resin material layer as described above, microcracks may not be sufficiently reduced when it is attempted to reduce microcracks through a selection of an auxiliary yarn.

During the course of study to reduce microcracks in a reinforcing fiber substrate having a resin material layer as described above, the present inventors have found that, in order to sufficiently reduce microcracks, it is important to reduce microcracks caused by a resin material layer, in particular by thermoplastic resin fibers constituting a resin material layer, in addition to microcracks caused by auxiliary yarns (in particular stitch yarns) which have been studied conventionally.

Accordingly, an object of the present invention is to provide a reinforcing fiber substrate having a resin material layer containing thermoplastic resin fibers, wherein the occurrence of microcracks caused by the resin material layer is reduced.

### [Solution to Problem]

The object of the invention is solved by the invention having the following embodiments:

### <Embodiment 1>

A reinforcing fiber substrate, comprising:
one or more reinforcing fiber layers comprising reinforcing fibers,
one or more resin material layers comprising thermoplastic resin fibers, and
an auxiliary yarn,
wherein the auxiliary yarn retains the integrity of the reinforcing fiber layer and/or the reinforcing fiber substrate by connecting the reinforcing fibers together and/or connecting the reinforcing fiber layers together, and
wherein the mean fiber diameter of the thermoplastic resin fibers is 0.5 µm to 35 µm.

### <Embodiment 2>

The reinforcing fiber substrate according to Embodiment 1, wherein the resin material layer consists of a nonwoven fabric comprising thermoplastic resin fibers.

### <Embodiment 3>

The reinforcing fiber substrate according to Embodiment 1 or 2, wherein the thermoplastic resin fiber has a melting point in a range of 130°C to 230°C.

### <Embodiment 4>

The reinforcing fiber substrate according to any one of Embodiments 1 to 3, wherein the thermoplastic resin fiber is a fiber of a polyamide resin, a polyester resin, a polyethersulfone (PES) resin, or a polyetherimide (PEI) resin.

### <Embodiment 5>

The reinforcing fiber substrate according to any one of Embodiments 1 to 4, wherein the reinforcing fiber layer is a unidirectional woven fabric having the reinforcing fibers as warp yarns aligned in one direction and the auxiliary yarns as weft yarns.

### <Embodiment 6>

The reinforcing fiber substrate according to any one of Embodiments 1 to 5, wherein the reinforcing fiber substrate comprises at least two reinforcing fiber layers stacked on top of each other, the at least two reinforcing fiber layers are each composed of the reinforcing fibers aligned in one direction, and the at least two reinforcing fiber layers are stitched together by a stitch yarn as the auxiliary yarn.

### <Embodiment 7>

The reinforcing fiber substrate according to Embodiment 6, wherein an extending direction of the reinforcing fibers constituting one of the at least two reinforcing fiber layers is different from an extending direction of the reinforcing fibers constituting the other one of the reinforcing fiber layers.

### <Embodiment 8>

The reinforcing fiber substrate according to any one of Embodiments 1 to 7, wherein the one or more resin material layers are each disposed on a surface of one of the reinforcing fiber layers.

### <Embodiment 9>

The reinforcing fiber substrate of any one of Embodiments 1 to 8, wherein at least one of the resin material layers is disposed between two of the reinforcing fiber layers.

### <Embodiment 10>

The reinforcing fiber substrate according to any one of Embodiments 1 to 9, wherein the auxiliary yarn, which is a stitching yarn, has a fineness of 1 to 75 dtex and/or has 1 to 50 filaments.

### <Embodiment 11>

The reinforcing fiber substrate according to any one of Embodiments 1 to 10, wherein the auxiliary yarn consists of a resin fiber having a melting point of 80°C to 185°C.

### <Embodiment 12>

The reinforcing fiber substrate according to any one of Embodiments 1 to 11, wherein the auxiliary yarn comprises a fiber of a polyamide resin, a polyester resin, a polyethersulfone (PES) resin, or a polyetherimide (PEI) resin.

### <Embodiment 13>

The reinforcing fiber substrate according to any one of Embodiments 1 to 12, wherein the auxiliary yarn comprises a compound having at least one selected from a group consisting of a hydroxyl group, an amino group, a phenol group, a lactam group and an epoxy group, as well as an amide bond and an ester bond.

### <Embodiment 14>

The reinforcing fiber substrate according to any one of Embodiments 1 to 13, wherein the auxiliary yarn is an auxiliary yarn which melts when heated at 180 °C for 2 hours, or the coefficient of linear expansion of the auxiliary yarn in the fiber axial direction after being heated at 180 °C for 2 hours and cooled is -1×10⁻⁶ to 80×10⁻⁶/K.

### <Embodiment 15>

A preform material, comprising the reinforcing fiber substrate according to any one of Embodiments 1 to 14 and a binder resin, wherein the binder resin is 1 to 20 parts by mass with respect to 100 parts by mass of the reinforcing fiber substrate.

### <Embodiment 16>

A method for producing a preform material, comprising:
heating a composite, which comprises the reinforcing fiber substrate according to any one of Embodiments 1 to 14 and a binder resin, under pressure.

### <Embodiment 17>

A fiber-reinforced resin composite material, comprising the reinforcing fiber substrate according to any one of Embodiments 1 to 14 and a matrix resin impregnated in the reinforcing fiber substrate.

### <Embodiment 18>

A method for producing a fiber-reinforced composite material, comprising impregnating the reinforcing fiber substrate according to any one of Embodiments 1 to 14 with a matrix resin.

### [Advantageous Effects of Invention]

According to the present invention, it is possible to provide a reinforcing fiber substrate having a resin material layer comprising thermoplastic resin fibers, in which the occurrence of microcracks caused by the resin material layer is reduced.

### [Brief Description of Drawings]

[Fig. 1]

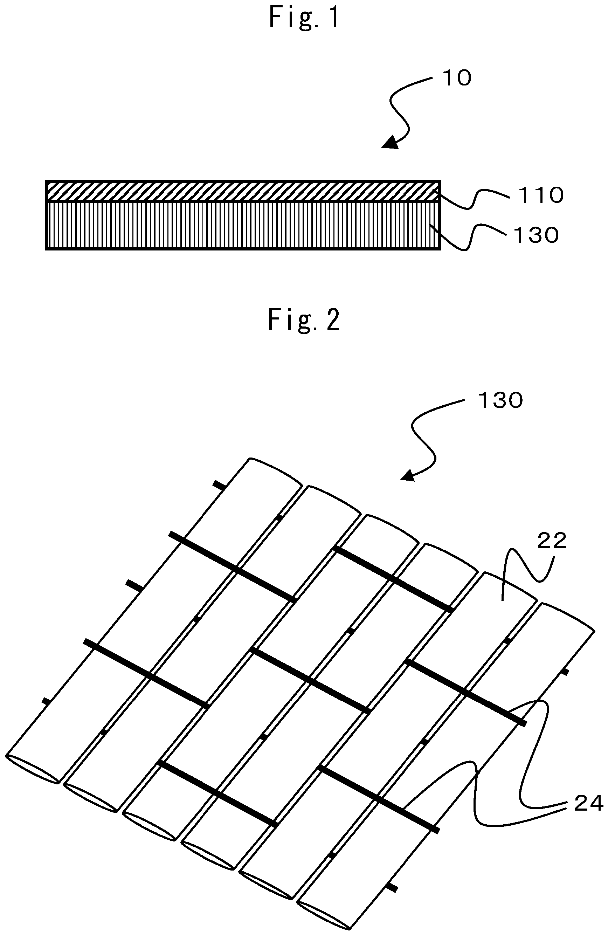

   FIG. 1 shows a cross-sectional schematic view of a reinforcing fiber substrate according to one embodiment of the present invention.
[Fig. 2]
   FIG. 2 shows a perspective schematic view of a reinforcing fiber layer of FIG. 1.
[Fig. 3]

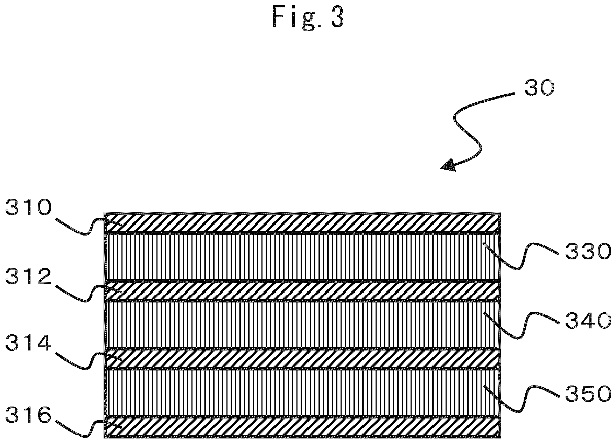

   FIG. 3 shows a cross-sectional schematic view of a reinforcing fiber substrate according to another embodiment of the present invention.
[Fig. 4]

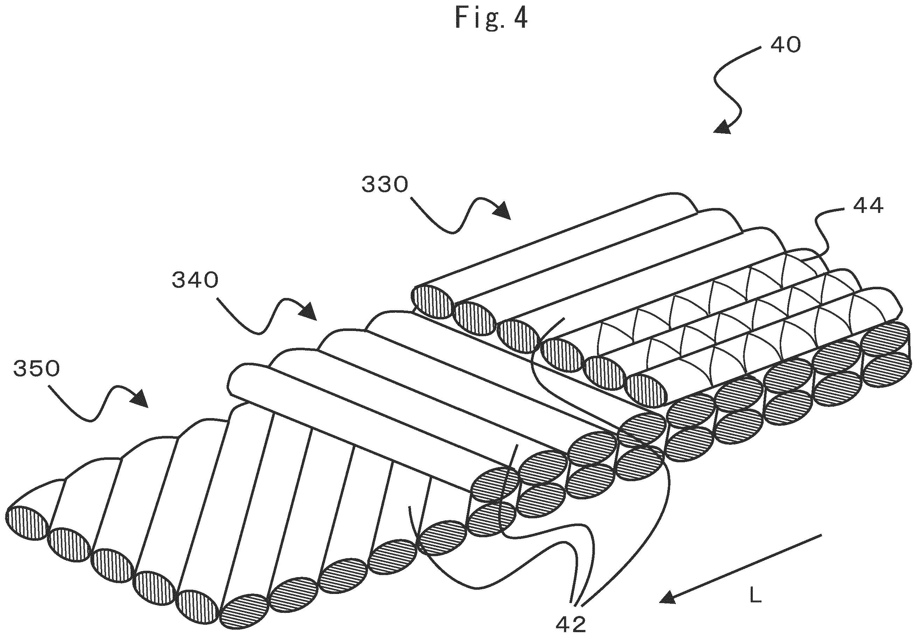

   FIG. 4 shows a perspective view of the plurality of reinforcing fiber layers of FIG. 3.

### <<Reinforcing fiber substrate>>

The reinforcing fiber substrate according to the present disclosure comprises:
one or more reinforcing fiber layers comprising reinforcing fibers,
one or more resin material layers comprising thermoplastic resin fibers, and
an auxiliary yarn

wherein the auxiliary yarn retains the integrity of the reinforcing fiber layer and/or the reinforcing fiber substrate by connecting the reinforcing fibers together and/or the reinforcing fiber layers together, and
wherein the thermoplastic resin fibers have an mean fiber diameter of 0.5 µm to 35 µm.

As described above, in order to sufficiently reduce microcracks in a reinforcing fiber substrate having a resin material layer containing thermoplastic resin fibers, the inventors of the present invention paid attention to microcracks caused by a resin material layer.

Microcracks here are fine cracks of several to several tens of micrometers which may occur in a fiber-reinforced composite material used in particular in aerospace applications. These fine cracks tend to occur in an environment in which a thermal shock cycles are repeated for several hundred cycles or more, the thermal shock cycles being accompanied by a rapid temperature change from a high temperature about 70 to 100°C to a low temperature of about -50 to -60 °C. Although a matrix resin contained in a fiber-reinforced composite material tends to shrink as the temperature changes from a high temperature to a low temperature, deformation of the matrix resin is suppressed by the reinforcing fibers having a coefficient of linear expansion lower than that of the matrix resin, and as a result, residual thermal stress is accumulated inside the matrix resin. Thus, due to the fatigue stress accumulated by the thermal shock cycles, microcracks are likely to occur. Similarly, auxiliary yarns and nonwoven fabric fibers comprised in a reinforcing fiber substrate often have different coefficients of linear expansion from that of a matrix resin, and residual thermal stress is concentrated at the interface of these components in a fiber-reinforced composite material, resulted in microcracks originated from interfacial separation at the interface.

According to the reinforcing fiber substrate of the present invention, it is possible to suppress the occurrence of microcracks in a reinforcing fiber substrate having a resin material layer. Without wishing to be bound by theory, it is considered that, in the reinforcing fiber substrate according to the present invention, since the mean fiber diameter of the thermoplastic resin fibers contained in the resin material layer is relatively small, an absolute value of the amount of volume change of the thermoplastic resin fibers which accompanies thermal shock cycles are reduced and a residual thermal stress per unit interface generated between the matrix resin and the thermoplastic resin fibers are also reduced, and as a result, the occurrence of microcracks caused by a resin material layer is reduced.

In addition, the present invention brings about a particularly advantageous effect in a reinforcing fiber substrate in which microcracks caused by auxiliary yarns have already been reduced by use of improved auxiliary yarns (e.g., stitch yarns). Without wishing to be bound by theory, it is considered that when an auxiliary yarn having relatively poor microcrack resistance is used, the frequency of occurrence of microcracks caused by the auxiliary yarn is relatively high. On the other hand, it is considered that although the microcracks caused by the auxiliary yarn are reduced in a reinforcing fiber substrate using an auxiliary yarn having improved microcrack resistance, microcracks due to a resin material layer tends to increase. As described above, according to the present invention, the occurrence of such microcracks can be suppressed.

Further, according to the reinforcing fiber substrate of the present invention, a composite (a fiber-reinforced resin composite material) having improved impact resistance may be obtained. Without wishing to be bound by theory, in the reinforcing fiber substrate according to the present invention, since the fiber diameter of the thermoplastic resin fiber contained in the resin material layer is relatively small, the ratio of the interface per volume between the thermoplastic resin fiber and the matrix resin increases. It is considered that this improved interfacial ratio efficiently absorbs an energy generated from external impact between layers of a fiber-reinforced composite material, thereby suppressing the propagation of interlayer cracks and consequently improving the post-impact strength of the composite.

### <Reinforcing fiber substrate>

The reinforcing fiber substrate according to the present disclosure comprises one or more reinforcing fiber layers comprising reinforcing fibers, one or more resin material layers comprising thermoplastic resin fibers, and an auxiliary yarn.

In order to facilitate understanding of the present invention, an exemplary structure of the reinforcing fiber substrate according to the present disclosure will be schematically described with reference to the drawings. The drawings are schematic illustrations for facilitating understanding of the present invention and are not to scale and are not intended to limit the present invention.

FIG. 1 shows a cross-sectional schematic diagram of a minimal configuration of a reinforcing fiber substrate 10 according to one embodiment of the present invention. The reinforcing fiber substrate 10 comprises a resin material layer 110 and a reinforcing fiber layer 130 which are stacked on top of each other. The resin material layer 110 is disposed on the surface of the reinforcing fiber layer 130. The resin material layer 110 comprises thermoplastic resin fibers. The resin material layer 110 may be a nonwoven fabric consisting of thermoplastic resin fibers. The reinforcing fiber layer 130 is composed of reinforcing fibers aligned in one direction. An auxiliary yarn (not shown) may serve to retain the integrity of the reinforcing fiber layer and/or the reinforcing fiber substrate by connecting the reinforcing fibers together and/or connecting the reinforcing fiber layers together.

FIG. 2 shows a perspective schematic view of the reinforcing fiber layer 130 of FIG. 1. In FIG. 2, the resin material layer 110 is not shown. In the embodiment of FIG. 2, the reinforcing fiber layer 130 is a unidirectional fabric (UD-woven fabric). The unidirectional fabric is a so-called "sudare" -blind woven fabric and is composed of reinforcing fibers (in particular, bundles of reinforcing fibers) 22 aligned in one direction and auxiliary yarns 24. The reinforcing fibers 22 as warp yarns and the auxiliary yarns 24 as weft yarns intersect each other to form a woven fabric.

FIG. 1 and FIG. 2 describes a minimum configuration of a reinforcing fiber substrate having one reinforcing fiber layer and one resin material layer, but the reinforcing fiber substrate may have a plurality of reinforcing fiber layers and/or resin material layers. For example, resin material layers may be laminated between a plurality of reinforcing fiber layers.

FIG. 3 shows a cross-sectional schematic view of a reinforcing fiber substrate 30 according to another embodiment of the present invention. The reinforcing fiber substrate 30 includes a plurality of laminated resin material layers 310 to 316 and a plurality of reinforcing fiber layers 330, 340, and 350. Each of the resin material layers 312 and 314 is disposed between layers of the reinforcing fiber layers 330, 340, and 350. The resin material layers 310 and 316 are disposed as the outermost layer. The resin material layers 310 to 316 may be nonwoven fabrics composed of thermoplastic resin fibers. The reinforcing fiber layers 330, 340, 350 are made of reinforcing fibers aligned in one direction. The auxiliary yarn (not shown) may serve to retain the shape of the reinforcing fiber layers 330, 340, 350 (in particular, a sheet shape) and the integrity of the reinforcing fiber substrate 30 by connecting the reinforcing fibers of the reinforcing fiber layers 330, 340, 350 together and/or connecting the reinforcing fiber layers 330, 340, 350 together.

FIG. 4 is a perspective view corresponding to the reinforcing fiber substrate of FIG. 3. In FIG. 4, the resin material layers 310 to 316 are not shown. The plurality of reinforcing fiber layers 330, 340, 350 of FIG. 4 constitute a non-crimp fabric 40. In other words, the reinforcing fiber layers 330, 340, and 350 are each formed of reinforcing fibers 42 aligned in one direction, and these laminated reinforcing fiber layers are integrated by being stitched together with a stitch yarn 44 as an auxiliary yarn. The stitch yarn 44 as an auxiliary yarn can extend continuously in the thickness direction of the laminate over the plurality of reinforcing fiber layers. For simplicity, only a portion of the auxiliary yarn is shown in FIG. 4. In the non-crimp fabric, since bending of the reinforcing fibers hardly occur, the mechanical properties of a fiber-reinforced composite material produced from the reinforcing fiber substrate can be further improved.

In the embodiment shown in FIG. 4, the reinforcing fibers constituting each of the plurality of reinforcing fiber layers have different extending directions. In other words, the reinforcing fibers constituting the reinforcing fiber layer 330 extend along the direction L shown in FIG. 4; the reinforcing fibers constituting the reinforcing fibers 340 extend at an angle of about 90° with respect to the direction L; and the reinforcing fibers constituting the reinforcing fibers 450 extend at an angle of about 45° with respect to the direction L.

The resin material layers 310 to 316 disposed on the reinforcing fiber layers may also be stitched by the auxiliary yarn 44, together with the plurality of reinforcing fiber layers.

The reinforcing fiber substrate according to the present disclosure preferably has a basis weight of 100 to 2000 g/m², more preferably 150 to 1500 g/m². In addition, the thickness of the reinforcing fiber substrate according to the present disclosure can be appropriately selected depending on the application of a molded article, etc., but can be 0.1 to 2 mm or 0.5 to 1.5 mm.

### <Resin material layer>

The reinforcing fiber substrate according to the present disclosure comprises a resin material layer comprising thermoplastic resin fibers.

In one preferred embodiment according to the present disclosure, the resin material layer is a sheet comprising thermoplastic resin fibers, in particular a nonwoven fabric comprising thermoplastic resin fibers.

The resin material layer can be laminated together with reinforcing fiber layer(s) to form a laminate, for example, as illustrated in FIGS. 1 and 3. In such a laminate, the resin material layer may be disposed between reinforcing fiber layers. Preferably, the resin material layer is adjacent to a reinforcing fiber layer, and in particular is arranged on the surface of a reinforcing fiber layer. When the reinforcing fiber substrate has a resin material layer, the impact resistance of a fiber-reinforced resin composite material produced from the reinforcing fiber substrate can be improved. A reinforcing fiber layer and a resin material layer may be bonded to each other by a binder. For a binder, reference can be made to the description of the preform material which will be described later.

When the reinforcing fiber layer is a unidirectional woven fabric, the resin material layer may be disposed, for example, on a main surface of the unidirectional woven fabric.

When the reinforcing fiber substrate comprises a non-crimp fabric, the resin material layer may be disposed as the outermost layer (i.e., may be disposed on one or both sides of the main surface of a laminate consisting of a plurality of reinforcing fiber layers), and/or may be disposed between a plurality of reinforcing fiber layers constituting a non-crimp fabric.

The resin material layer (in particular, the nonwoven fabric) preferably has a thickness of 1 µm to 50 µm, more preferably 2 µm to 40 µm, even more preferably 3 µm to 35 µm.

### (Thermoplastic resin fiber)

According to the present invention, the resin material layer comprises thermoplastic resin fibers having an mean fiber diameter of 0.5 µm to 35 µm (hereinafter, also referred to as "small-diameter thermoplastic resin fibers").

The mass ratio of the thermoplastic resin fibers having a mean fiber diameter of 0.5 µm to 35 µm is preferably 50% by mass or more, more preferably 80% by mass or more, and particularly preferably 90% by mass or more, with respect to the resin material layer. In particular, the resin material layer consists of thermoplastic resin fibers having an mean fiber diameter of 0.5 µm to 35 µm.

The mean fiber diameter of the small-diameter thermoplastic resin fibers is, preferably, 0.5 µm to 34 µm, 0.5 µm to 32 µm, 0.5 µm to 30 µm, 1 µm to 25 µm, or 1 µm to 20 µm, more preferably 2 µm to 15 µm, particularly preferably 3 µm to 12 µm, most preferably 4 µm to 8 µm.

The mean fiber diameter of the small-diameter thermoplastic resin fibers can be determined by averaging the values of fiber diameters measured for at least 30 fibers using an optical microscope.

With respect to the mean fiber diameter of the small-diameter thermoplastic resin fiber, a coefficient of variation of fiber diameter is preferably reduced, and the coefficient of variation of fiber diameter is more preferably 0.20 or less. The coefficient of variation of fiber diameter is more preferably 0.18 or less, 0.16 or less, 0.14 or less, 0.12 or less, or 0.10 or less. It is preferable that a coefficient of variation of fiber diameter is reduced as low as possible, and therefore the lower limit thereof is not particularly limited, but can be, for example, 0.01 or more, 0.02 or more, or 0.05 or more. It is considered that if a coefficient of variation of fiber diameter is reduced, a proportion of fibers having a relatively large diameter is reduced, and thus the occurrence of cracks can be suppressed or avoided particularly well. By producing a nonwoven fabric by the melt-blowing method, a coefficient of variation of fiber diameter for fibers contained in a nonwoven fabric can be particularly well reduced.

The coefficient of variation of fiber diameter can be measured by measuring fiber diameter using an optical microscope.

The small-diameter thermoplastic resin fiber preferably has a melting point in the range 130°C to 230°C, particularly preferably in the range 160°C to 230°C. The small-diameter thermoplastic resin fiber according to the present invention exhibits good microcrack resistance even when it has a relatively high melting point (in particular, a melting point of 185°C to 230°C, 190°C to 230°C, or 195°C to 225°C). When a small-diameter thermoplastic resin fiber having a relatively high melting point is used, since a resin material layer can retain its shape in manufacturing process of a fiber-reinforced composite material, the expansion of cracks can be effectively suppressed, and the impact resistance may be further improved. In addition, when a small-diameter thermoplastic resin fiber having a relatively high melting point is used, the heat resistance of the resultant fiber-reinforced composite material may be improved, and the mechanical properties of the fiber-reinforced composite material in a high-temperature environment may be further improved.

The melting point of a thermoplastic resin fiber can be determined by means of a differential scanning calorimeter, according to standard JIS K7121, and according to the following conditions:
temperature range: room temperature to 250°C
heating rate: 5°C/min

The small-diameter thermoplastic resin fibers are preferably fibers of polyolefin resins, polyamide resins, polyester resins, cellulose fibers, polyethersulfone (PES) resins, or polyetherimide (PEI) resins, and particularly preferably fibers of polyamide resins. Examples of polyamide (PA) resin include PA6, PA12, PA11, PA6-6, PA6-10, PA6-12, PA10-10, PA6/PA12 copolymers. From the viewpoint of heat resistance, a fiber comprising an aromatic compound is preferable.

Preferably, the resin material layer is composed of continuous fibers. In addition, preferably, the basis weight of a resin material layers is 1 g/m² to 15 g/m², more preferably 2 g/m² to 10 g/m², and particularly preferably 4 g/m² to 6 g/m².

### (Nonwoven fabric composed of small-diameter thermoplastic resin fibers)

In one embodiment of the present disclosure, the resin material layer is a nonwoven fabric comprising thermoplastic resin fibers having the mean fiber diameter of 0.5 µm to 35 µm, and more preferably a nonwoven fabric consisting of thermoplastic resin fibers having the mean fiber diameter of 0.5 µm to 35 µm. Such nonwoven fabrics can in particular be produced by the melt-blowing process. By using the melt-blowing method, a nonwoven fabric containing thermoplastic resin fibers having a smaller fiber diameter can be produced as compared with the case of using the spun-bonding method.

### <Reinforcing fiber layer>

The reinforcing fiber layer comprises reinforcing fibers.

In one embodiment according to the present disclosure, the reinforcing fiber layer is unidirectional (UD). In other words, the reinforcing fiber layer is formed from reinforcing fibers aligned along one direction. As the reinforcing fiber layer, for example, a reinforcing fiber sheet can be used, and in particular, it is possible to use a reinforcing fiber sheet obtained by processing a continuous fiber bundle of reinforcing fibers into the shape of a sheet. The reinforcing fiber layer is in particular a unidirectional woven fabric, or a plurality of reinforcing fiber layers constitute a non-crimp fabric, as described above with reference to the drawings.

In other words, in one embodiment, the reinforcing fiber layer is a unidirectional woven fabric which comprises reinforcing fibers aligned in one direction as warp yarns and auxiliary yarns as weft yarns.

Further, in another embodiment of the present invention, a non-crimp fabric is comprised, wherein the reinforcing fiber substrate comprises at least two reinforcing fiber layers stacked on top of each other, wherein each of the at least two reinforcing fiber layers are composed of reinforcing fibers aligned in one direction, and wherein the at least two reinforcing fiber layers are stitched together by a stitch yarn as an auxiliary yarn.

Preferably, in the reinforcing fiber substrate according to the present disclosure, the extending direction of reinforcing fibers in one of at least two reinforcing fiber layers is different from the extending direction of reinforcing fibers in the other one of reinforcing fiber layers. In particular, a plurality of reinforcing fiber layers made of reinforcing fibers aligned in one direction are sequentially laminated by changing the fiber axis direction. According to such an embodiment, isotropy of a reinforcing fiber substrate is improved, which is preferable.

### (Reinforced fiber)

Examples of the reinforcing fibers include carbon fibers, glass fibers, aramid fibers, boron fibers, and metal fibers. The reinforcing fibers are preferably carbon fibers.

The mean length of the reinforcing fibers is not particularly limited, but may be, for example, 5 cm to 100 m.

### <Auxiliary yarn>

The auxiliary yarn of the present disclosure has a role of retaining the integrity of a reinforcing fiber layer and/or a reinforcing fiber substrate by connecting reinforcing fibers together and/or connecting reinforcing fiber layers together.

In one embodiment, the auxiliary yarn constitutes a weft yarn with respect to a reinforcing fiber as a warp yarn. For example, the auxiliary yarn as a weft yarn intersects with unidirectionally-aligned reinforcing fibers at an angle of about 90°, so as to form a unidirectional woven fabric.

In one embodiment, the auxiliary yarn is a stitch yarn. The way of stitching a reinforcing fiber substrate with a stitch yarn is not particularly limited, but for example a stitch yarn stitches a plurality of reinforcing fiber layers together in a laminate having a plurality of laminated reinforcing fiber layers made of unidirectionally-aligned reinforcing fibers.

When the auxiliary yarn is used as a stitch yarn, it preferably has a fineness of 1 dtex to 75 dtex, more preferably a fineness of 15 dtex to 40 dtex. Further, the auxiliary yarn preferably has a single fiber diameter of 10 to 40 µm. The auxiliary yarn preferably has 1 to 50 filaments (single fibers), more preferably 4 to 24 filaments. When using an auxiliary yarn which satisfies at least one of these conditions, the occurrence of microcracks at the interface between the auxiliary yarn and a matrix resin may be suppressed in a composite comprising the reinforcing fiber substrate.

In one preferred embodiment of the present invention, the auxiliary yarn is composed of a resin fiber, the melting point of which is 80 to 185°C, in particular 85 to 175°C. By using such an auxiliary yarn, the occurrence of microcracks at the interface between the auxiliary yarn and a matrix resin may be suppressed.

In one preferred embodiment of the present disclosure, the auxiliary yarn comprises fibers of polyolefin resins, polyamide resins, polyester resins, cellulose fibers, polyethersulfone (PES) resins, or polyetherimide (PEI) resins, or mixtures thereof. Alternatively, the auxiliary yarn may consist of at least one of these. From the viewpoint of heat resistance, it is preferable to use fibers made of an aromatic compound, and it is more preferable to use fibers made of a wholly aromatic compound.

In one preferred embodiment of the present invention, the auxiliary yarn comprises a compound having a polar group and/or polar bond, in particular a compound having at least one selected from the group consisting of a hydroxyl group, an amino group, a phenol group, a lactam group, an epoxy group, an amide bond and an ester bond. For example, as a material for the auxiliary yarn, it is possible to use fibers formed from a compound having a polar group and/or a polar bond in a chemical structure. Alternatively, an organic compound having a polar group and/or a polar bond may be attached to the auxiliary yarn.

When the auxiliary yarn has a polar group and/or a polar bond, since excellent affinity with a matrix resin is provided, the interfacial separation between the auxiliary yarn and the matrix resin is suppressed, and the occurrence of microcracks at the interface between the auxiliary yarn and the matrix resin can be further suppressed.

In particular, when a thermosetting resin is used as a matrix resin, by using a reactive group such as a hydroxyl group, an amino group, or an epoxy group as a polar group, the reactive group contained in a fiber and the thermosetting resin can react with each other at the interface between the matrix resin and the fiber during the process of manufacturing a fiber-reinforced composite material, so as to form a covalent bond, and as a result, the interface adhesion between the auxiliary yarn and the matrix resin may be further increased.

In a preferred embodiment of the present disclosure, the auxiliary yarn is an auxiliary yarn having a -1×10⁻⁶ to 80×10⁻⁶ /K coefficient of linear expansion in the fiber axial direction after being heated at 180°C for 2 hours and cooled, or is an auxiliary yarn which melts when heated at 180°C for 2 hours. In this case, in a composite material comprising the reinforcing fiber substrate, the occurrence of microcracks at the interface between the auxiliary yarn and a matrix resin can be suppressed.

The coefficient of linear expansion of the auxiliary yarn is a coefficient of linear thermal expansion measured in a temperature range of -50°C to 70°C. The coefficient of linear expansion is more preferably -1×10⁻⁶ to 70×10⁻⁶/K, even more preferably 5×10⁻⁶ to 50×10⁻⁶/K, and particularly preferably 10×10⁻⁶ to 30×10⁻⁶/K. The coefficient of linear expansion can be measured as follows:
performing heating at 180°C for 2 hours and cooling so as not to apply tension to the fiber sample, followed by measuring a coefficient of linear expansion in the axial direction by a thermomechanical analyzer under the following measurement conditions. Cooling after heating at 180°C for 2 hours can be performed by leaving the heated sample under the condition of 25°C so as to slowly cool the sample (in particular, natural cooling).

### [Measurement Conditions]

onset temperature of heating: -60°C
measurement temperature range: -50 to 70°C
final temperature of heating: 100°C
heating rate: 5°C/min
load: 0.0001N

In addition, it is preferable that the coefficient of linear expansion is equal to or less than a coefficient of linear expansion (CTEm (×10⁻⁶/K) of a matrix resin which is used in combination when a fiber-reinforced composite material is produced, and the coefficient of linear expansion of a stitch yarn is preferably within a range of CTEm (×10⁻⁶/K) to (CTEm - 30) (×10⁻⁶/K). In addition, the coefficient of linear expansion of a stitch yarn is preferably equal to or greater than a coefficient of linear expansion (CTEf (×10⁻⁶/K) of a reinforcing fiber in the fiber direction used in a reinforcing fiber sheet, and is preferably in the range of CTEf (×10⁻⁶/K) to (CTEf + 30) (×10⁻⁶/K).

In the reinforcing fiber substrate according to the present disclosure, the amount of the auxiliary yarn may be 1 to 10 g/m², and more preferably 2 to 5 g/m².

### <Preform material>

When the reinforcing fiber substrate of the present invention is used to mold a fiber-reinforced composite material, the reinforcing fiber substrate can be used as it is, but from the viewpoint of handleability and workability, it is preferable to use a preform material, which is obtained by stacking and pre-molding the reinforcing fiber substrates.

The preform material can be produced by a method comprising a step of heating, under pressure, a composite comprising a reinforcing fiber substrate and a binder resin (in particular a composite composed of these components). For example, production of a preform material is performed by stacking, on one surface of a mold for producing a preform, the reinforcing fiber substrates of the present invention or the reinforcing fiber substrate of the present invention and other reinforcing fiber substrate(s), to a desired thickness; optionally spraying a powder of a resin as a binder (a binder resin) or laminating a resin sheet if necessary; and performing a pre-mold by heating under pressure by a press, etc., using a heating plate, etc. The resin is melted by heating, and the reinforcing fiber substrates of the present invention, or the reinforcing fiber substrate of the present invention and other reinforcing fiber sheet(s), are molded to the shape of the mold, so as to form a preform material having the shape of the mold. In addition, by pressurizing the preform material, adhesion of a laminate of reinforcing fibers is further facilitated, which makes it possible to improve the shape stability of the preform material. Further, Since the pressurization reduces the volume of the preform material, it is possible to obtain a fiber-reinforced composite material having high volume ratio of reinforcing fibers and having good mechanical properties. Preferable temperature range at the time of manufacturing a preform material is dependent on the type of resin material used as a binder resin, but may be heated under pressure preferably to a range of 50°C to 200°C, more preferably 60°C to 180°C, further preferably 70°C to 160°C. This is suitable for obtaining a preform material having a volume ratio of reinforcing fibers in a range of 45 to 62%, and it is possible to obtain a fiber-reinforced composite material having stable quality.

A resin material used as the binder resin is not particularly limited, and a thermosetting resin such as an epoxy resin or a vinyl ester resin, a thermoplastic such as a polyamide or a polyether sulfone, and a mixture thereof, can be appropriately used. These resins may be used as a powder by spraying, or these resins may be formed into a sheet, a nonwoven fabric, etc., and laminated onto the reinforcing fiber substrate of the present invention. Alternatively, these resins may be in advance attached to each fiber constituting the reinforcing fiber substrate of the present invention.

The amount of the binder resin constituting the preform material is preferably 1 to 20 parts by mass, and more preferably 5 to 10 parts by mass, with respect to 100 parts by mass of the reinforcing fiber substrate of the present invention. The thickness of the preform material varies depending on the intended use, but is preferably 1 to 40 mm.

The preform material may be formed into a fiber-reinforced composite material by known molding methods such as RTM method or RFI method. A preform material produced by the above method retains its three-dimensional shape even after the pre-forming. Therefore, it is possible to transport the preform material from a mold for producing a preform to a mold for producing a fiber-reinforced composite material, without losing its shape. Therefore, there is no need to directly laminate them to a mold for producing a fiber-reinforced composite, and the occupation time of the mold can be reduced, and the productivity of a fiber-reinforced composite material is improved.

### <<Fiber-reinforced composite material >>

A fiber-reinforced resin composite material (also referred to as a fiber-reinforced plastic, FRP; a composite) can be produced from the reinforcing fiber substrate of the present disclosure and a matrix resin impregnated in the reinforcing fiber substrate.

The fiber-reinforced resin composite material comprises, or is substantially composed of, reinforcing fiber substrate according to the present disclosure and a matrix resin.

A method for producing a fiber-reinforced composite material according to the present disclosure may comprise a step of impregnating the reinforcing fiber substrate according to the present disclosure with a matrix resin. For example, a fiber-reinforced resin composite material can be obtained by impregnating a reinforcing fiber substrate with a liquid resin (namely, for example, an uncured curable resin or a thermoplastic resin in a molten state), and curing or solidifying the resin.

A method for producing a fiber-reinforced composite material is not particularly limited, and a prepreg may be formed in which a matrix resin is impregnated in advance in a reinforcing fiber substrate, or a Resin Transfer Molding method (RTM method) or a Resin Film Infusion molding method (RFI method), etc., may be employed to combine a reinforcing fiber substrate and a matrix resin at the same time as they are molded. Preferably, the reinforcing fiber substrate of the present invention is used in a molding process of RTM method or RFI method.

### (Matrix resin)

As a matrix resin which can be used in the present invention, a thermosetting resin or a thermoplastic is used. The coefficient of linear expansion (CTEm) of a matrix resin is preferably 40×10⁻⁶ to 70×10⁻⁶/K. The matrix resin may be one type or a mixture of two or more resins, and may contain a colorant, a filler, various additives, etc. When a matrix resin comprises a thermosetting resin, the thermosetting resin may be 30% by mass or more, 40% by mass or more, or 50% by mass or more, and/or may be 100 % by mass or less, 90% by mass or less, 80% by mass or less, or 70% by mass or less, with respect to the matrix resin.

As the thermosetting resin, mention may be made of epoxy resins, unsaturated polyester resins, phenol resins, melamine resins, polyurethane resins, silicone resins, maleimide resins, vinyl ester resins, cyanate ester resins, a resin obtained by pre-polymerizing maleimide resins and cyanate ester resins, and urethane acrylate resins, phenoxy resins, alkyd resins, urethane resins, bismaleimide resins, polyimide resins and polyisomide resins with acetylene terminals, and polyimide resins with nadic acid ends. These resins can be used alone or used two or more of these resins as a mixture. Among these resins, an epoxy resin, a vinyl ester resin, a bismaleimide resin, and a polyimide resin are particularly preferable as they have excellent heat resistance, elastic modulus, and chemical resistance.

### (Epoxy resin)

The epoxy resin which can be used in the present invention as the thermosetting resin is not particularly limited, but examples thereof include tetraglycidyl-4,4'-diaminodiphenylmethane, tetraglycidyl-4,4'-diaminodiphenylsulfone, tetraglycidyl-3,3'-diaminodiphenylsulfone, tetraglycidyl-4,4'-diaminodiphenylether, tetraglycidyl-3,4'-diaminodiphenylether and other tetrafunctional glycidylamine-type epoxy resins, triglycidyl-m-aminophenol, triglycidyl-p-aminophenol, triglycidyl isocyanurate and other trifunctional epoxy resins, diglycidyl aniline and its derivative diglycidyl-o-toluidine, diglycidyl-m-toluidine, diglycidyl-p-toluidine, diglycidyl-xylidine, diglycidyl-mesidine, diglycidyl-anisidine, diglycidyl-phenoxyaniline, or diglycidyl-naphthylamine and derivatives thereof, bisphenol A diglycidyl ether, bisphenol F diglycidyl ether, bisphenol S diglycidyl ether, resorcinol diglycidyl ether, 1,6-naphthalenediol diglycidyl ether and other bifunctional epoxy resins. These epoxy resins may be used alone, or a mixture of a plurality of epoxy resins may be used.

### (Curing agent)

As the thermosetting resin which can be used in the present invention, a known curing agent can be used. In particular, it is preferable to use an amine-based curing agent, from the viewpoint of mechanical properties of a cured product. The thermosetting resin which can be used in the present invention may or may not contain the curing agent in advance. A thermosetting resin containing no curing agent is prepared in a state in which it can be mixed with a curing agent before or during curing.

Examples of the amine-based curing agent include latent curing agents such as dicyandiamide, aliphatic polyamines, various isomers of aromatic polyamine-based curing agents, aminobenzoic acid esters, and acid anhydrides. Dicyandiamide is preferable because it brings about an excellent storage stability of a reinforcing fiber substrate impregnated with a matrix resin.

Aliphatic polyamines are preferable because it has high reactivity and allows curing reactions at low temperatures. Examples of the aliphatic polyamine include 4,4'-diaminodicyclohexylmethane, isophoronediamine, and m-xylylenediamine.

The aromatic polyamine is preferable because it brings about excellent heat resistance and various mechanical properties. Examples of the aromatic polyamine include diaminodiphenylsulfone, diaminodiphenylmethane, and toluenediamine derivatives. Aromatic diamine compounds such as 4,4'-diaminodiphenylsulfone, 3,3'-diaminodiphenylsulfone, and 4,4'-diaminodiphenylmethane and their derivatives having non-reactive substituents are particularly preferred from the viewpoint of providing a cured product having good heat resistance. The non-reactive substituents here are the same as the non-reactive substituents described with regard to the epoxy resin.

Preferred aminobenzoic acid ester includes trimethylene glycol-di-p-aminobenzoate and neopentyl glycol-di-p-aminobenzoate. A composite material cured by using these compounds has excellent tensile elongation, although heat resistance may be inferior as compared with various isomers of diaminodiphenylsulfone.

Examples of acid anhydrides include 1,2,3,6-tetrahydrophthalic anhydride, hexahydrophthalic anhydride, and 4-methylhexahydrophthalic anhydride. When these curing agents are used, a long pot life of an uncured resin composition can be obtained and a cured product can be obtained which has relatively balanced electrical, chemical, mechanical properties, etc. Therefore, types of the curing agent to be used is appropriately selected depending on the application of a composite material.

Further, when the thermosetting resin is used in the RTM method, it is preferable to comprise a curing agent made of an aromatic polyamine having at least one of an aliphatic substituent, an aromatic substituent, and a halogen-atom substituent in the ortho position with respect to the amino group.

The curing agent suitable for the RTM method may be any polyamines having the above-described structure, and specific examples thereof include 4,4'-diaminodiphenylmethane and derivatives thereof, phenylenediamine and derivatives thereof.

Examples of the derivatives of 4,4'-diaminodiphenylmethane include hindered amine compounds such as 4,4'-methylenebis (2,6-diethylaniline), 4,4'-methylenebis (2-ethyl-6-methylaniline), and 4,4'-methylenebis (2-isopropyl-6-methylaniline). These curing agents can improve the storage stability of an uncured thermosetting resin and the pot life at the time of molding by RTM, and improve the water absorption properties of a cured resin product.

Examples of the derivatives of phenylenediamine include 2,4-diaminotoluene, 2,6-diaminotoluene, 2,4,6-trimethyl-1,3-phenylenediamine, m-phenylenediamine, diethyltoluenediamine, and dimethylthiotoluenediamine. These curing agents can improve the curing rate of an uncured thermosetting resin and viscous properties at the time of molding by RTM, and can improve the mechanical properties and heat resistance of a cured resin product.

The total amount of the curing agent contained in the thermosetting resin which can be used in the present invention is an amount suitable for curing all of thermosetting resins (in particular, all of epoxy compounds) blended in a matrix resin, and is appropriately adjusted according to types of the thermosetting resin (in particular, the epoxy compound) and types of curing agent used.

Specifically, for example, the ratio of the number of epoxy groups contained in epoxy compound(s) in a matrix resin to the number of active hydrogens contained in curing agent(s) is preferably 0.7 to 1.3, more preferably 0.8 to 1.2, and particularly preferably 0.9 to 1.1. If this ratio is less than 0.7 or greater than 1.3, the molar balance of the epoxy group and the active hydrogen is lost, and a crosslinking density of resultant resin cured product may become insufficient, and heat resistance and mechanical properties such as elastic modulus and fracture toughness may be deteriorated.

When a matrix resin contains a thermosetting resin, the matrix resin may also contain a colorant, a filler, various additives, etc., in addition to a curing agent and a curing accelerator. In order to improve the impact resistance of a matrix resin, it is preferable to contain a thermoplastic resin component or resin particles.

### (Thermoplastic resin component)

The matrix resin may further include a thermoplastic resin in addition to the thermosetting resin. Examples of the thermoplastic resin include thermoplastic resins soluble in epoxy resin and thermoplastic resins insoluble in epoxy resin.

The thermoplastic resin soluble in epoxy resin can adjust the viscosity of a matrix resin and improve the impact resistance of resultant fiber-reinforced composite material. The thermoplastic resin soluble in epoxy resin is a thermoplastic resin all or part of which can be dissolved in an epoxy resin at or less than a molding temperature of a fiber-reinforced composite material.

Note that "partially dissolved in an epoxy resin" means that, when 10 parts by mass of a thermoplastic resin having a mean particle diameter of 20 to 50 µm is mixed with respect to 100 parts by mass of an epoxy resin and stirred at 190°C for 1 hour, the particles disappear or the size (particle diameter) of the particles changes by 10% or more.

On the other hand, the thermoplastic resin insoluble in epoxy resin refers to a thermoplastic resin which does not substantially dissolve in an epoxy resin at a temperature at or lower than a molding temperature of a fiber-reinforced composite material. Namely, it refers to a thermoplastic resin that, when 10 parts by mass of the thermoplastic resin having a mean particle diameter of 20 to 50 µm is mixed with respect to 100 parts by mass of an epoxy resin and stirred at 190°C for 1 hour, the size of the particles does not change by 10% or more. In general, the molding temperature of a fiber-reinforced composite material is 100 to 190°C. In addition, the particle diameter is visually measured by a microscope, and the mean particle diameter refers to a mean value of diameters of 100 randomly selected particles.

When a thermoplastic resin soluble in epoxy resin is not completely dissolved, it is dissolved in an epoxy resin by being heated in the curing process of the epoxy resin, which can increase the viscosity of a matrix resin. As a result, it is possible to prevent a flow of the matrix resin caused by a decrease in viscosity during the curing process (a phenomenon in which a matrix resin flows out of a reinforcing fiber substrate impregnated with a matrix resin).

The thermoplastic resin soluble in epoxy resin is preferably a resin which dissolves 80% by mass or more in an epoxy resin at 190°C.

Specific examples of the thermoplastic resin soluble in epoxy resin include polyethersulfone, polysulfone, polyetherimide, and polycarbonate. These may be used alone or in combination of two or more thereof. The thermoplastic resin soluble in epoxy resin contained in an epoxy resin composition is particularly preferably polyethersulfone or polysulfone having a weight-average molecular weight (Mw) of 8,000 to 100,000 as measured by gel permeation chromatography. If the weight-average molecular weight (Mw) is less than 8,000, the resultant fiber-reinforced composites may have insufficient impact resistance, and if the weight-average molecular weight (Mw) is greater than 100,000, the viscosities may be significantly high and the handleability may be significantly deteriorated.

The thermoplastic resin soluble in epoxy resin preferably has an uniform molecular weight distribution. In particular, a polydispersity (Mw/Mn), which is a ratio of a weight-average molecular weight (Mw) to a number-average molecular weight (Mn), is preferably in the range of 1 to 10, and more preferably in the range of 1.1 to 5.

The thermoplastic resin soluble in epoxy resin preferably has a reactive group which is reactive with an epoxy resin or a functional group which forms a hydrogen bond. Such a thermoplastic resin soluble in epoxy resin can improve the dissolution stability of an epoxy resin during the curing process. Further, toughness, chemical resistance, heat resistance and moist heat resistance can be imparted to a fiber-reinforced composite material obtained after curing.

The reactive group having reactivity with an epoxy resin is preferably a hydroxyl group, a carboxyl group, an imino group or an amino group. Use of a hydroxyl-terminated polyether sulfone is more preferable because the resultant fiber-reinforced composite material has particularly excellent impact resistance, fracture toughness, and solvent resistance.

The content of the thermoplastic resin soluble in epoxy resin contained in a matrix resin is appropriately adjusted based on viscosity. From the viewpoint of processability of a prepreg and/or fiber-reinforced composite material, the content is preferably 5 to 90 parts by mass, more preferably 5 to 40 parts by mass, and particularly preferably 15 to 35 parts by mass, with respect to 100 parts by mass of epoxy resin(s) contained in a matrix resin. If the amount is less than 5 parts by mass, the resultant fiber-reinforced composite material may have insufficient impact resistance, which is not preferable. On the other hand, when the content of the thermoplastic resin soluble in epoxy resin exceeds 90 parts by mass, the viscosity becomes remarkably high, and the handleability of a reinforcing fiber substrate impregnated with a matrix resin may be remarkably deteriorated, which is not preferable.

The thermoplastic resin soluble in epoxy resin preferably contains a reactive aromatic oligomer having an amine end group (hereinafter, also simply referred to as "aromatic oligomer").

Molecular weight of a matrix resin increases during heat curing by a curing reaction between an epoxy resin and a curing agent. When a biphasic region expands due to higher molecular weight of the matrix resin, an aromatic oligomer dissolved in the matrix resin causes a reaction-induced phase separation. This phase separation causes a formation of a two-phase structure of a resin in the matrix resin, in which the cured epoxy resin and the aromatic oligomer become co-continuous. In addition, since the aromatic oligomer has an amine end group, a reaction with an epoxy resin also occurs. Further, since each phase in the co-continuous two-phase structure is firmly bonded to each other, the solvent resistance is also improved.

This co-continuous structure absorbs external impact to a fiber-reinforced composite material and suppresses crack propagation. Consequently, a fiber reinforced composite made from a reactive aromatic oligomer having an amine end group exhibits high impact resistance and fracture toughness.

As the aromatic oligomer, a polysulfone having a known amine end group and a polyethersulfone having an amine end group can be used. The amine end group is preferably a primary amine (-NH₂) end group.

The aromatic oligomer blended in a matrix resin preferably has a weight average molecular weight of 8,000 to 40,000 as measured by gel permeation chromatography. When the weight average molecular weight is less than 8,000, the effect of improving the toughness of a matrix resin is low, which is not preferable. On the other hand, when the weight average molecular weight is more than 40,000, the viscosity of a matrix resin becomes excessively high, and problems in processing such as a difficulty in impregnating a resin composition into a reinforcing fiber layer tend to occur, which is not preferable.

As the aromatic oligomer, a commercially available product such as "Virantage DAMS VW-30500 RP (trademark)" (manufactured by Solvay Specialty Polymers) can be preferably used.

The thermoplastic resin soluble in epoxy resin is preferably in the form of particles. The thermoplastic soluble epoxy resin in the form of particles is able to be uniformly blended in a matrix resin. In addition, a resultant prepreg and/or fiber-reinforced composite material has high moldability.

The mean particle size of the thermoplastic resin soluble in epoxy resin is preferably 1 to 50 µm, more preferably 3 to 30 µm. If it is less than 1 µm, the viscosity of a matrix resin is remarkably increased, so that it may be difficult to add a sufficient amount of the thermoplastic resin soluble in epoxy resin to a matrix resin, which is not preferable. On the other hand, if it is more than 50 µm, when a matrix resin is processed into a sheet, it may be difficult to obtain a sheet having a uniform thickness, and the dissolution rate in an epoxy resin decreases, and a resultant fiber-reinforced composite material becomes non-uniform, which is not preferable.

When a matrix resin contains a thermosetting resin, the matrix resin may contain a thermoplastic resin insoluble in epoxy resin in addition to the thermoplastic resin soluble in epoxy resin. The thermoplastic resin insoluble in epoxy resin or a portion of the thermoplastic resin soluble in epoxy resin (i.e., the thermoplastic resin soluble in epoxy resin which has not been dissolved in the matrix resin and which has left after curing) is dispersed in a matrix resin of a fiber-reinforced composite material as particles (hereinafter, the dispersed particles are also referred to as "interlayer particles"). These interlayer particles mitigate the propagation of impact experienced by the fiber-reinforced composite material. As a result, the impact resistance of a resultant fiber-reinforced composite material is improved.

Examples of the thermoplastic resin insoluble in epoxy resin include polyamide, polyacetal, polyphenylene oxide, polyphenylene sulfide, polyester, polyamideimide, polyimide, polyether ketone, polyether ether ketone, polyethylene naphthalate, polyether nitrile, and polybenzimidazole. Among them, polyamide, polyamideimide, and polyimide are preferred because of their high toughness and heat resistance.

Polyamides and polyimides are particularly excellent in improving the toughness of a fiber-reinforced composite material. These resins may be used alone or in combination of two or more thereof. Copolymers of the above resins can also be used.

In particular, amorphous polyimide or polyamides such as nylon 6 (trademark) (a polyamide obtained by a ring-opening polycondensation reaction of caprolactam), nylon 11 (a polyamide obtained by a ring-opening polycondensation reaction of undecane lactam), nylon 12 (a polyamide obtained by a ring-opening polycondensation reaction of lauryl lactam), nylon 1010 (a polyamide obtained by a co-polymerization reaction of sebacic acid and 1,10-decanediamine), or amorphous nylon (a nylon which is also called transparent nylon and does not cause crystallization of a polymer or has a very slow crystallization rate of a polymer) can be used, in order to substantially increase the heat resistance of a resultant fiber-reinforced composite material.

With respect to the thermoplastic resin insoluble in epoxy resin which can be used in the present invention, the content thereof in a matrix resin is appropriately adjusted according to the viscosity of the matrix resin. From the viewpoint of processability of a prepreg and/or fiber-reinforced composite material, the amount is preferably 5 to 50 parts by mass, more preferably 10 to 45 parts by mass, and particularly preferably 20 to 40 parts by mass with respect to 100 parts by mass of epoxy resin(s) contained in a matrix resin. If the amount is less than 5 parts by mass, a resultant fiber-reinforced composite material may have insufficient impact resistance, which is not preferable. On the other hand, if the amount is more than 50 parts by mass, the impregnation property of a matrix resin, the drapability of a reinforcing fiber substrate impregnated with the matrix resin may be lowered, which is not preferable.

Preferred mean particle diameter and shape of the thermoplastic resin insoluble in epoxy resin are the same as those of the thermoplastic resin soluble in epoxy resin.

### (Resin particles)

When a matrix resin which can be used in the present invention contains a thermosetting resin, the matrix resin may further contain resin particles. The resin particles are dispersed in a thermosetting resin (in particular, an epoxy resin) without being dissolved, and are also dispersed in a cured resin product after the thermosetting resin (in particular, the epoxy resin) has been cured. When the cured resin product is considered as a "sea" component, the resin particles are then present in the cured resin product as "island" components.

If the resin particles are contained, it is possible to obtain high fracture toughness and impact resistance in a cured resin product or fiber-reinforced composite material, which is preferable. In addition, inclusion of resin particles in a matrix resin may result in particularly good microcrack resistance.

As the resin particles, for example, thermoplastic resin particles, thermosetting resin particles, and rubber particles can be used, and rubber particles are preferably used. Examples of the rubber particles include silicone rubber, butadiene rubber, styrene butadiene rubber, and methyl methacrylate-butadiene-styrene rubber. One type of the resin particle may be used, or two or more types of resin particles may be used in combination.

As a commercially available product of rubber particles used as the resin particles, following components can be exemplified: MX-153 (a product obtained by single-dispersing 33% by mass of butadiene rubber in a bisphenol A type epoxy resin; manufactured by Kaneka Corporation), MX-257 (a product obtained by single-dispersing 37% by mass of butadiene rubber in a bisphenol A type epoxy resin; manufactured by Kaneka Corporation.), MX-154 (a product obtained by single-dispersing 40% by mass of butadiene rubber in a bisphenol A type epoxy resin; manufactured by Kaneka Corporation.), MX-960 (a product obtained by single-dispersing 25 % by mass of silicone rubber in a bisphenol A type epoxy resin, manufactured by Kaneka Corporation.), MX-136 (a product obtained by single-dispersing 25 % by mass of butadiene rubber in a bisphenol F type epoxy resin, manufactured by Kaneka Corporation.), MX-965 (a product obtained by single-dispersing 25 % by mass of silicone rubber in a bisphenol F type epoxy resin, manufactured by Kaneka Corporation.), MX-217 (a product obtained by single-dispersing 25 % by mass of butadiene rubber in a phenol novolak type epoxy resin, manufactured by Kaneka Corporation.). MX-227M75 (a product obtained by single-dispersing 25 % by mass of styrene butadiene rubber in a bisphenol A novolak type epoxy resin, manufactured by Kaneka Corporation.), MX-334M75 (a product obtained by single-dispersing 25 % by mass of styrene butadiene rubber in a brominated epoxy resin, manufactured by Kaneka Corporation.), MX-414 (a product obtained by single-dispersing 25 % by mass of butadiene rubber in a tetrafunctional glycidyl amine type epoxy resin, manufactured by Kaneka Corporation.), MX-451 (a product obtained by single-dispersing 25 % by mass of styrene butadiene rubber in a trifunctional glycidyl amine type epoxy resin, manufactured by Kaneka Corporation.).

The mean particle diameter of the resin particles is preferably 1.0 µm or less, more preferably 0.5 µm or less, and particularly preferably 0.3 µm or less. The mean particle diameter is preferably 0.03 µm or more, more preferably 0.05 µm or more, and particularly preferably 0.08 µm or more. When the mean particle diameter is 1.0 µm or less, in the step of impregnating a reinforcing fiber substrate with a matrix resin, the resin particles are not filtered by the surface of the reinforcing fiber substrate, and easily impregnated into reinforcing fiber bundles, thereby impregnation deficiency of resin can be prevented, and thus it is possible to obtain a fiber-reinforced composite material having excellent physical properties, which is preferable.

The mean particle size of the resin particles can be determined by observing a cross section of a fiber-reinforced composite material with a scanning electron microscope or a transmission electron microscope, measuring the diameters of at least 50 resin particles, and averaging them. Observation can be performed at a magnification of 25,000. In a case where the resin particles are not perfectly circular, i.e., if the resin particles are elliptical, etc., the maximum diameter of the resin particles can be used as the particle diameter of the resin particles.

The content of resin particles is preferably 0.1 to 30 parts by mass, more preferably 0.5 to 20 parts by mass, and particularly preferably 1 to 10 parts by mass, with respect to 100 parts by mass of the total of thermosetting resins (particularly, 100 parts by mass of the total of epoxy resins). When the content is 0.1 parts by mass or more, it is possible to sufficiently improve fracture toughness and impact resistance of a cured resin product or fiber composite material, which is preferable. On the other hand, when the content is 30 parts by mass or less, the viscosity of a matrix resin can be lowered, and the impregnation property into a fiber substrate can be enhanced, which is preferable.

The resin particles can also be used in the form of a masterbatch, in which the resin particles are dispersed in a thermosetting resin (in particular, an epoxy resin) in a high concentration. In this case, the resin particles can be easily dispersed in the thermosetting resin (in particular, the epoxy resin).

In one embodiment of the present disclosure, a matrix resin constituting a fiber-reinforced composite material comprises 0.1 to 30 parts by mass of resin particles with respect to 100 parts by mass of a thermosetting resin, and the resin particles have an mean particle size of 1.0 µm or less.

### (RTM method)

The fiber-reinforced composite material of the present invention is preferably obtained by a RTM method (Resin Transfer Molding method), from the viewpoint of efficiently obtaining a fiber-reinforced composite material having a complex shape. The RTM method includes a step of impregnating a reinforcing fiber substrate disposed in a mold with a liquid thermosetting resin before curing or a molten thermoplastic resin as a matrix resin, and a step of curing or solidifying the matrix resin in order to obtain a fiber-reinforced composite material.

In the present invention, a mold used for the RTM method may be a closed mold made of rigid material, or it is also possible to use an open mold made of a rigid material and a flexible film (bag). In the latter case, a reinforcing fiber substrate can be placed between the open mold of rigid material and the flexible film. As the rigid material, known materials can be used, for example, a metal such as steel or aluminum, a fiber reinforced plastic (FRP), wood, gypsum. As a material for the flexible film, polyamide, polyimide, polyester, fluororesin, silicone resin, etc., are used.

In the RTM method, when the closed mold made of rigid material is used, the mold is clamped under pressure, and a matrix resin is injected under pressure. At this time, a suction port may be provided separately from a injection port, and it may be connected to a vacuum pump for suction. It is also possible to perform suction and inject a matrix resin only by atmospheric pressure without using any special pressurization means. This method is preferable because a large size member can be manufactured by providing a plurality of suction ports.

In the RTM method, when the open mold made of rigid material and the flexible film are used, it is possible to perform suction and inject a matrix resin only by atmospheric pressure without using any special pressurization means. In order to achieve good impregnation only by using atmospheric pressure injection, it is effective to use a resin diffusion medium. In addition, it is preferable to apply a gel coat to the surface of the rigid material before disposing a reinforcing fiber substrate.

In the RTM method, when a thermosetting resin is used as a matrix resin, a reinforcing fiber substrate is impregnated with the matrix resin and then heat-cured. The mold temperature at the time of the heat curing is usually selected to be higher than the mold temperature at the time of injecting the thermosetting resin. The mold temperature at the time of the heat curing is preferably 80 to 200°C. The duration of the heat curing is preferably from 1 minute to 20 hours. After the heat curing is completed, a fiber-reinforced composite material is removed by demolding. Thereafter, the obtained fiber-reinforced composite material may be heated at a higher temperature for post-curing. The temperature of the post-curing is preferably 150 to 200°C, and the duration is preferably 1 minute to 4 hours.

Impregnation of a matrix resin into a reinforcing fiber substrate can be performed, for example, by injecting the matrix resin containing a heated (e.g., in a range 80 to 120°C) thermosetting resin into a vacuum environment comprising the reinforcing fiber substrate. More specifically, for example, after placing hoses to form a resin inlet and resin outlet, a reinforcing fiber substrate is covered with a bag (for example a nylon bag film), and sealed with sealant tape, etc. Thereafter, the inside of the bag is depressurized (e.g., to 5 Torr or less), and then the matrix resin containing a heated (e.g., in a range 80 to 120°C) thermosetting resin is injected through the resin inlet, in order to perform impregnation.

When an epoxy resin is used as a matrix resin, the impregnation pressure at the time of impregnating a reinforcing fiber substrate with the epoxy resin in RTM method is appropriately determined in consideration of the viscosity/resin flow of the resin. Specific impregnation pressure is 0.001 to 10 MPa and preferably 0.01 to 1 MPa. When a fiber-reinforced composite material is obtained using the RTM method, the viscosity of an epoxy resin at 100°C is preferably less than 5000 mPa·s, and more preferably 1 to 1000 mPa·s.

The amount of a matrix resin is preferably 20 to 60 parts by mass, and more preferably 30 to 40 parts by mass with respect to 100 parts by mass of a reinforcing fiber substrate.

In the molding method, the viscosity of a matrix resin is preferably 0.01 to 1Pa·s at the injection temperature. It is preferable to treat a resin to be injected in advance, for example by heating the resin, so that the viscosity at the time of the injection is within the above range.

### (Microcracks)

Since the fiber-reinforced composite material according to the present disclosure has the reinforcing fiber substrate according to the present disclosure, the crack density is reduced. Specifically, the crack density after the thermal shock test is preferably 0.30 cracks/(cm.ply) or less, more preferably 0.20 cracks/(cm.ply) or less, and still more preferably 0.10 cracks/(cm.ply) or less.

The thermal shock test (cold-heat shock test) for measuring crack density after the thermal shock test can be performed as follows:
Subjecting a fiber-reinforced composite material to a thermal shock cycle for 1000 times using a thermal shock tester. One cycle of the thermal cycle is set to consist of a plateau phase of 55°C for 15 minutes, followed by a 15-minute-temperature shift phase to a temperature of 70°C, followed by a plateau phase of 70°C for 15 minutes, followed by a 15-minute-temperature shift phase back to a temperature of -55°C, and this cycle is repeated 1000 times.

The crack density after the thermal shock test can be measured as follows:
The number of cracks in the cross section inside a test piece of a fiber-reinforced resin composite material after the thermal shock test above is measured by microscope observation at a magnification of 200 times. More specifically, the test piece after the thermal shock test (width 80 mm× length 50 mm× thickness 5mm) is cut into four equal parts of width 40mm × length 25mm, the cut surface in the thickness direction is mirror polished, and each of the long side and the short side is used as the observation surface, respectively. Observation area for the microscope observation of microcracks is set to 50 mm² or more, and the number of cracks measured is divided by the number of plies and the width of the observation surface, in order to calculate the crack density. The unit of crack density is "number/(cm-ply)". The values of the crack density obtained from the observation of the long side and the short side are averaged so as to obtain the final crack density.

<Application>

The reinforcing fiber substrate according to the present disclosure and a fiber-reinforced resin composite material (composite) produced using the same can be used for applications such as a structural material for aircraft, automobiles, railway vehicles, and ships. In other words, the reinforcing fiber substrate according to the present disclosure and a composite produced using the same can be used as a material constituting a body of a vehicle such as an aircraft, an automobile, a railway vehicle, and a ship.

### [Examples]

Hereinafter, the present invention will be described in more detail by way of Examples, but the present invention is not limited to the Examples. The components and test methods used in the examples and comparative examples are described below.

### <Evaluation method>

Evaluations performed in Examples and Comparative Examples were performed as described below.

### (Coefficient of linear expansion of auxiliary yarn)

A fiber sample was heated at 180°C for 2 hours so as not to apply tension, and cooled down in atmosphere at 25°C, and then a coefficient of linear expansion in the axial direction was measured with a thermomechanical analyzer (manufactured by TA Instruments; Model: TMA Q400).

### [Measurement Conditions]

| | |
|---|---|
| onset temperature of heating | : - 60°C |
| measuring temperature range | : - 50 to 70°C |
| final temperature of heating | : 100°C |
| heating rate | : 5°C/min |
| load | : 0.0001N |

### (Melting point of auxiliary yarn)

Melting point of an auxiliary yarn was measured in accordance with JIS K7121.

Three milligram (3 mg) of the auxiliary yarn was weighed into an aluminum pan and used as a sample. The temperature at the apex of the melt endothermic peak was measured by DSC (NETZSCH's DSC3500 Sirius) as the melting point of the auxiliary yarn. When there were a plurality of melting endothermic peaks, the value measured at the lowest temperature side was taken as the melting point of the auxiliary yarn.

### [Measurement Conditions]

| | |
|---|---|
| temperature range | : room temperature to 250°C |
| heating rate | : 5°C/min |

### (Melting point of nonwoven fabric)

The melting point of a thermoplastic resin fiber constituting a nonwoven fabric was measured in accordance with JIS K7121.

Three milligram (3 mg) nonwoven was weighed onto an aluminum pan and used as a sample. The temperature at the apex of the melt endothermic peak was measured by DSC (NETZSCH's DSC3500 Sirius) as the melting point of the nonwoven fabric. When there were a plurality of melting endothermic peaks, the value measured at the lowest temperature side was taken as the melting point of the nonwoven fabric.

### [Measurement Conditions]

| | |
|---|---|
| temperature range | : room temperature to 250°C |
| heating rate | : 5°C/min |

### (Mean fiber diameter of thermoplastic resin fiber)

The mean fiber diameter of a thermoplastic resin fiber constituting a nonwoven fabric as a resin material layer was measured by averaging the values of fiber diameters measured using an optical microscope for at least 30 fibers. A VHX-5000 manufactured by Keyence Corporation was used as a microscope and observation was preformed at 300 × magnification.

### (Coefficient of variation of fiber diameter)

The coefficient of variation of fiber diameter for thermoplastic resin fibers constituting a nonwoven fabric was determined by measuring fiber diameters for at least 30 fibers using an optical microscope, and dividing the standard deviation value of the measured fiber diameters by the mean value of fiber diameters. A VHX-5000 manufactured by Keyence Corporation was used as a microscope and observation was performed at 300× magnification.

### (Fiber fineness, single yarn)

One hundred meter (100 m) of a stitch yarn as an auxiliary yarn was wound up using a measuring machine, and the mass thereof was measured. The mass obtained was multiplied by 100 in order to calculate mass per 10000 m, and the value was defined as the fineness (dtex). The number of single fibers of a stitch yarn was measured by observation using an optical microscope.

### (Thermal Shock Test)

A fiber-reinforced composite material was subjected to 1000 times thermal cycles with a thermal shock tester (TSA-73EH-W manufactured by ESPEC CORP.). One cycle of the thermal cycle was set to consist of a plateau phase of 55°C for 15 minutes, followed by a 15-minute-temperature shift phase to a temperature of 70°C, followed by a plateau phase of 70°C for 15 minutes, followed by a 15-minute-temperature shift phase back to a temperature of -55°C, and this cycle was repeated 1000 times.

### (Crack density)

The number of cracks in the cross section of inside a test piece of a fiber reinforced composite material after the thermal shock test was measured by microscopic observation. A VHX-5000 manufactured by Keyence Corporation was used as a microscope and observation was performed at 200× magnification. More specifically, the test piece after the thermal shock test (width 80 mm× length 50 mm× thickness 5mm) is cut into four equal parts of width 40mm × length 25mm, mirror polished the cut surface in the thickness direction, and each of the long side and the short side is used as the observation surface, respectively. Observation area for the microscope observation of microcracks was set to 50 mm² or more, and the number of cracks measured is divided by the number of plies (the number of layers) and the width (L (cm)) of the observation surface, in order to calculate the crack density. The unit of crack density is "number/(cm·ply)". The values of the crack density obtained from the observation of the long side and the short side were averaged so as to obtain the final crack density.

### (Compression-after-impact strength (CAI strength))

A carbon-fiber-reinforced resin composite (CFRP) was cut into dimensions of the width 101.6 mm × length 152.4 mm to obtain a test piece for compression-after-impact (CAI) test. This test piece was subjected to 30.5J impact and damaged according to SACMA SRM 2R-94, and then the compression-after-impact strength (units: MPa) was measured. The crosshead speed of the test piece compression tester was set to 1 mm/min, and five test pieces were measured.

### (Method for measuring mean particle diameter of resin particles contained in matrix resin)

The cross section of a fiber-reinforced composite material after heat curing was observed at 25,000 × magnification by a scanning electron microscope or a transmission electron microscope, and the mean particle diameter was determined by measuring the diameters of at least 50 particles and averaging them. In a case where the particles are not perfectly circular, i.e., if the particles are elliptical, etc., the maximum diameter of the particle is defined as the particle diameter of the particle.

### < Components >

The components used in Examples and Comparative Examples are described below.

### (Reinforcing fiber)

The following carbon fiber bundles were used as a reinforcing fiber:
Carbon fiber bundle "Tenax (trademark)" (manufactured by Teijin Limited, product number: HTS45-12K, tensile strength: 4.5 GPa, tensile modulus: 240 GPa, and coefficient of linear expansion: -0.5×10⁻⁶/K)

### (Unidirectional woven fabric)

Unidirectional woven fabric S-1: Dry Reinforcements Woven Fabric DRWF HTS45-UD manufactured by TEIJIN CARBON EUROPE GmbH; reinforcing fiber HTS45-12K; basis weight of the reinforcing fiber 194g/m²

This reinforcing fiber substrate (Unidirectional woven fabric S-1) is a woven fabric composed of the carbon fiber bundles HTS45-12K as described above, which are reinforcing fibers aligned in one direction as warp yarns, and auxiliary yarns as described below which are weft yarns. The reinforcing fiber substrate is a so-called "sudare"-blind woven fabric.
· auxiliary yarn for weft (weft yarn): Grilon (trademark) K-85; manufactured by EMS-CHEMIE AG; composite fiber of polyamide resin and polyester resin; fineness: 200 dtex; the number of single fibers: 44; coefficient of linear expansion cannot be measured because it melts by heating at 180°C for 2 hours; melting point: 86°C.

### (Auxiliary yarn)

For a stitch yarn as an auxiliary yarn, one of the following stitch yarns was used.
· Stitch yarn A-1: JOINER (trademark) H-Type, manufactured by Fujibo Holdings Inc; polyamide resin copolymer fiber; fineness: 33 dtex; the number of single fibers: 5; a coefficient of linear expansion cannot be measured because it melts by heating at 180°C for 2 hours; melting point: 131°C.
· Stitch yarn A-2: Grilon (trademark) KE-160, manufactured by EMS-CHEMIE AG; polyester resin fiber; fineness 75 dtex; the number of single fibers 14; a coefficient of linear expansion cannot be measured because it melts by heating at 180°C for 2 hours; melting point: 159°C · Stitch yarn A-3: Bemberg (trademark), manufactured by Asahi Kasei Corporation; copper ammonia rayon fiber (cellulose fiber); fineness: 33 dtex; the number of single fibers: 24; coefficient of linear expansion: 12×10⁻⁶/K; no melting point (thermally decomposed at 200°C or higher)
· Stitch yarn A-4: Grilon (trademark) K-178, manufactured by EMS-CHEMIE AG; polyamide resin fiber (PA12); fineness: 23 dtex; the number of single fibers: 4; coefficient of linear expansion: 70×10⁻⁶/K; melting point: 177°C
· Stitch yarn A-5: Grilon (trademark) K-203, manufactured by EMS-CHEMIE AG; polyamide resin fiber (PA6/PA12 copolymer); fineness: 33 dtex; the number of single fibers: 8; coefficient of linear expansion: 30×10⁻⁶ /K; melting point: 194°C
· Stitch yarn A-6: 33T-12-SOD0 manufactured by KB SEIREN LTD.; polyester resin fiber; fineness: 33 dtex; the number of single fibers: 12; coefficient of linear expansion: 100×10⁻⁶/K; melting point: 257°C.
· Stitch yarn A-7: Grilon (trademark) K-178, manufactured by EMS-CHEMIE AG; polyamide resin fiber (PA12); fineness: 33 dtex; the number of single fibers: 6; coefficient of linear expansion: 70×10⁻⁶/K; melting point: 177°C

### (Oil treatment agent)

·Oil agent 1: 5wt% aqueous solution of aliphatic epoxy compound "DENACOL" (trademark) EX832 (polyoxyethylene diglycidyl ether, manufactured by Nagase ChemteX Corporation, the number of epoxy groups: 2; epoxy equivalent weight: 284 g/Eq) (mixed such that the weight ratio of polyoxyethylene diglycidyl ether to water was 1:19).

### (Matrix resin)

As matrix resins for fiber-reinforced resin composite materials (composites), epoxy resins which are a liquid thermosetting resin were used. The compositions thereof (C-1 and C-2) are as follows. The coefficient of linear expansion of the cured products was 59×10⁻⁶/K, in both cases.

### · Matrix resin C-1:

### (Epoxy resin)

· 56 parts by mass of tetraglycidyl-4,4'-diaminodiphenylmethane (manufactured by Huntsman Japan Co., Ltd.; Araldite (trademark) MY721)
· 30 parts by mass of N,N-diglycidylaniline (manufactured by Nippon Kayaku Co., Ltd., product name: GAN)

### (Resin particle component)

· 19 parts by mass of MX-414 (manufactured by Kaneka Corporation; product name: MX-414; mean particle diameter: 0.11µm; a masterbatch in which particles of polybutadiene rubber component are dispersed in a glycidyl amine type tetrafunctional epoxy resin at a concentration of 25% by mass)

### (Curing agent)

· 31 parts by mass of 4,4'-diamino-3,3'-diisopropyl-5,5'-dimethyldiphenylmethane (manufactured by Arxada JAPAN; Lonzacure (trademark) M-MIPA d)
· 21 parts by mass of diethyltoluenediamine (manufactured by Arxada JAPAN; Lonzacure (trademark) DETDA80)

### ·Matrix Resin C-2:

### (Epoxy resin)

· 70 parts by mass of tetraglycidyl-4,4'-diaminodiphenylmethane (manufactured by Huntsman Japan Co., Ltd.; Araldite (trademark) MY721)
· 30 parts by mass of N,N-diglycidylaniline (manufactured by Nippon Kayaku Co., Ltd., product name: GAN)

### (Curing agent)

· 31 parts by mass of 4,4'-diamino-3,3'-diisopropyl-5,5'-dimethyldiphenylmethane (manufactured by Arxada JAPAN; Lonzacure (trademark) M-MIPA d)
· 21 parts by mass of diethyltoluenediamine (manufactured by Arxada JAPAN; Lonzacure (trademark) DETDA80)

### (Raw material for resin material layer)

· Polyamide PA12; melting point: 178°C; manufactured by Daicel-Evonik Co., Ltd.; product name: DIAMID L1640)
· Polyamide PA6-10; melting point: 222°C; manufactured by Daicel-Evonik Co., Ltd.;product name: VESTAMID TERRA HS16)
· Polyamide PA6-12; melting point: 215°C; manufactured by Daicel-Evonik Co., Ltd.; product name: VESTAMID DX9308)
· Polyamide PA10-10; melting point: 199°C; manufactured by Daicel-Evonik Co., Ltd.; product name: VESTAMID TERRA DS16)
· Polyamide PA6/PA12; melting point of copolymer: 197°C; manufactured by EMS-CHEMIE AG; product name: Grilon K-203)

### (Resin material layer)

As resin material layers, the following nonwoven fabrics were used which were produced by the melt blowing method using the above resin raw material.
· Nonwoven fabric B-1: polyamic PA12; mean fiber diameter: 5.8 µm (coefficient of variation of fiber diameter: 0.13); basis weight: 5 g/m²
· Nonwoven fabric B-2: polyamic PA12; mean fiber diameter: 16.3 µm (coefficient of variation of fiber diameter: 0.09); basis weight: 5 g/m²
· Nonwoven fabric B-3: polyamic PA12; mean fiber diameter: 29.3 µm (coefficient of variation of fiber diameter: 0.08); basis weight: 5 g/m²
· Nonwoven fabric B-4: polyamic PA12; mean fiber diameter: 5.7 µm (coefficient of variation of fiber diameter: 0.14); basis weight: 3 g/m²
· Nonwoven fabric B-5: polyamic PA6-10; mean fiber diameter: 5.9 µm (coefficient of variation of fiber diameter: 0.20); basis weight: 6 g/m²
· Nonwoven fabric B-6: polyamic PA6-12; mean fiber diameter: 6.6 µm (coefficient of variation of fiber diameter: 0.12); basis weight: 6 g/m²
· Nonwoven fabric B-7: polyamic PA10-10; mean fiber diameter: 7.7µm (coefficient of variation of fiber diameter: 0.19); basis weight: 6 g/m²

Further, as resin material layers, the following nonwoven fabrics were used which were produced by the spunbond production method using the above resin raw material.
· Nonwoven fabric B-8: polyamic PA12; mean fiber diameter: 49.5 µm (coefficient of variation of fiber diameter: 0.56); basis weight: 6 g/m²
· Nonwoven fabric B-9: polyamic PA6/PA12 copolymer; mean fiber diameter: 42.9µm (coefficient of variation of fiber diameter: 0.63); basis weight: 4 g/m²

### <<Examples 1 to 4 and Comparative Example 1>>

The reinforcing fiber substrates and fiber-reinforced composite materials (CFRP) according to Examples 1 to 4 and Comparative Example 1 were produced, and the physical properties of the obtained fiber-reinforced composite materials were evaluated. In Examples 1 to 4 and Comparative Example 1, reinforcing fiber substrates having a unidirectional woven fabric were produced.

### Example 1

### (Production of reinforcing fiber substrate)

The above-described nonwoven fabric B-1 was disposed on the surface of the above-described unidirectional woven fabric S-1 to produce the reinforcing fiber substrate according to Example 1.

### (Production of carbon-fiber-reinforced resin composite material)

Next, a carbon-fiber-reinforced resin composite was produced by a resin transfer molding method (RTM method) using the obtained reinforcing fiber substrate and a liquid thermosetting resin. First, on the substrate, a peel cloth Release Ply C (manufactured by AIRTECH), which is a substrate provided with a releasing function, and a resin-diffusing substrate Resin Flow 90HT(manufactured by AIRTECH) were laminated. Thereafter, hoses for forming a resin inlet and a resin outlet were placed, and the whole assembly was covered with a nylon bag film, sealed with a sealant tape, and the inside was evacuated. Subsequently, an aluminum plate was heated to 120°C, the inside of the bag was depressurized to a 5 Torr or less, and then a liquid thermosetting resin (matrix resin C-1) (35 parts by mass with respect to 100 parts by mass of the substrate) heated to 100°C was injected into the vacuum environment through the resin inlet. After the injected liquid thermosetting resin filled the inside of the bag and the liquid thermosetting resin was impregnated in the substrate, the temperature was raised to 180°C and maintained at 180°C for 2 hours to cure the thermosetting resin, in order to obtain a carbon-fiber-reinforced resin composite material (CFRP).

The CAI strength (compression strength) and crack density of the obtained composite material were measured. As can be seen in Table 1 below, in the CFRP produced using the reinforcing fiber substrate according to Example 1, no microcracks occurred after the thermal shock test, and the crack density was 0.00 /(cm-ply).

### Example 2

The reinforcing fiber substrate and the carbon-fiber-reinforced resin composite material according to Example 2 were produced and evaluated in the same manner as in Example 1, except that the nonwoven fabric B-2 was used instead of the nonwoven fabric B-1. The evaluation results are shown in Table 1 below.

### Example 3

The reinforcing fiber substrate and the carbon-fiber-reinforced resin composite material according to Example 3 were produced and evaluated in the same manner as in Example 1, except that the nonwoven fabric B-3 was used instead of the nonwoven fabric B-1. The evaluation results are shown in Table 1 below.

### Example 4

The reinforcing fiber substrate and the carbon-fiber-reinforced resin composite material according to Example 4 were produced and evaluated in the same manner as in Example 1, except that the nonwoven fabric B-4 was used instead of the nonwoven fabric B-1. The evaluation results are shown in Table 1 below.

### Comparative Example 1

The reinforcing fiber substrate and the carbon-fiber-reinforced resin composite material according to Comparative Example 1 were produced and evaluated in the same manner as in Example 1, except that the nonwoven fabric B-8 was used instead of the nonwoven fabric B-1. The evaluation results are shown in Table 1 below.

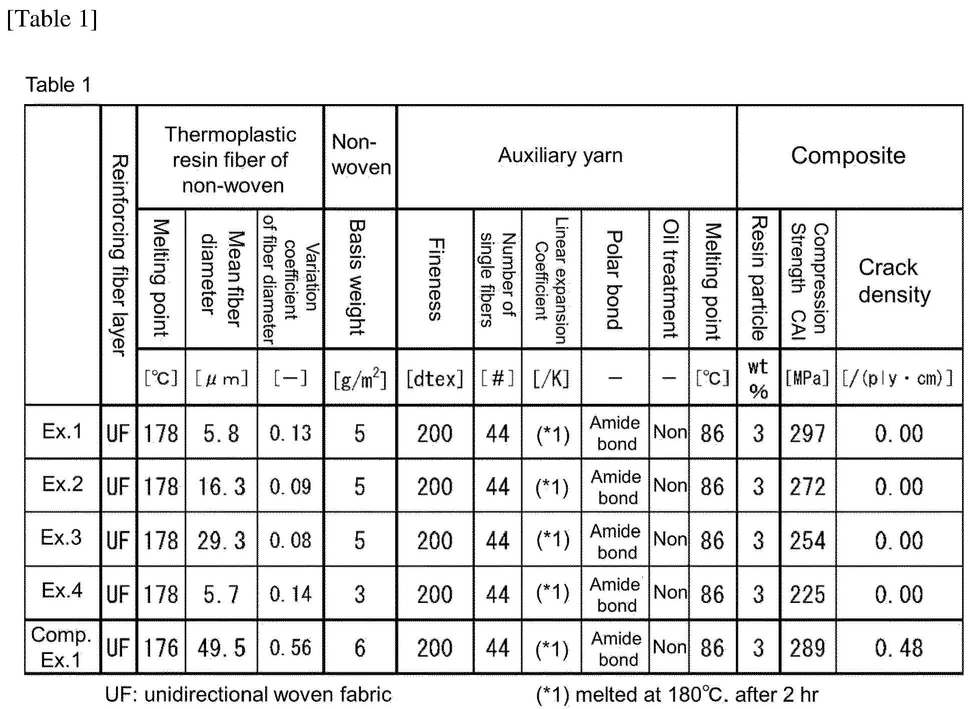

As can be seen in Table 1, in Examples 1 to 4 in which the mean fiber diameters of the thermoplastic resin fibers constituting the nonwoven fabrics were 5.7 to 29.3 µm, the occurrence of microcracks was reduced and better impact resistance of the composite materials was obtained, as compared with Comparative Example 1 in which the mean fiber diameter was 49.5µm.

### <<Examples 5 to 7 and Comparative Example 2>>

In Examples 5 to 7 and Comparative Example 2, reinforcing fiber substrates having non-crimp fabrics were produced. Further, as a thermoplastic resin fiber constituting a nonwoven fabric, thermoplastic resin fibers having a relatively high melting point were used.

### Example 5

### (Production of reinforcing fiber substrate)

Two hundreds reinforcing fibers described above (carbon fiber bundles) were aligned in one direction to produce a sheet, and four of these reinforcing fiber sheets were laminated with different angles in the order of -45°, 0°, +45°, and 90°, wherein the nonwoven fabrics B-5 were further disposed between each of the layers of the reinforcing fiber sheets. In this way, a laminated sheet was produced in which the four reinforcing fiber sheets having fibers aligned in one direction and the nonwoven fabrics disposed therebetween were laminated.

Next, the laminated sheet was stitched together in the thickness direction by the stitch yarn A-1 as an auxiliary yarn, in order to obtain the reinforcing fiber substrate according to Example 5 (basis weight of reinforcing fiber per layer: 190 g/m²; amount of stitch yarn used: 4 g/m²; total basis weight of reinforcing fiber substrate: 760 g/m²).

### (Production of carbon-fiber-reinforced resin composite material)

Next, a carbon-fiber-reinforced resin composite was produced by a resin transfer molding method (RTM method) using the obtained reinforced fiber substrate and a liquid thermosetting resin. First, on the substrate, a peel cloth Release Ply C (manufactured by AIRTECH), which is a substrate provided with a releasing function, and a resin-diffusing substrate Resin Flow 90HT(AIRTECH) were laminated. Thereafter, hoses for forming a resin inlet and a resin outlet were placed, and the whole assembly was covered with a nylon bag film, sealed with a sealant tape, and the inside was evacuated. Subsequently, an aluminum plate was heated to 120°C, the inside of the bag was depressurized to a 5 Torr or less, and then a liquid thermosetting resin (matrix resin C-1) (35 parts by mass with respect to 100 parts by mass of the substrate) heated to 100°C was injected into the vacuum environment through the resin inlet. After the injected liquid thermosetting resin filled the inside of the bag and the liquid thermosetting resin was impregnated in the substrate, the temperature was raised to 180°C and maintained at 180°C for 2 hours to cure the thermosetting resin, in order to obtain a carbon-fiber-reinforced resin composite material (CFRP).

The resulting composite material was measured for CAI strength (compression strength) and crack density. The results are shown in Table 2 below.

### Example 6

The reinforcing fiber substrate and the carbon-fiber-reinforced resin composite material according to Example 6 were produced and evaluated in the same manner as in Example 5, except that the nonwoven fabric B-6 was used instead of the nonwoven fabric B-5. The evaluation results are shown in Table 2 below.

### Example 7

The reinforcing fiber substrate and the carbon-fiber-reinforced resin composite material according to Example 7 were produced and evaluated in the same manner as in Example 5, except that the nonwoven fabric B-7 was used instead of the nonwoven fabric B-5. The evaluation results are shown in Table 2 below.

### Comparative Example 2

The reinforcing fiber substrate and the carbon-fiber-reinforced resin composite material according to Comparative Example 2 were produced and evaluated in the same manner as in Example 5, except that the nonwoven fabric B-9 was used instead of the nonwoven fabric B-5. The basis weight of the non-woven fabric used was 4 g/m². The evaluation results are shown in Table 2 below.

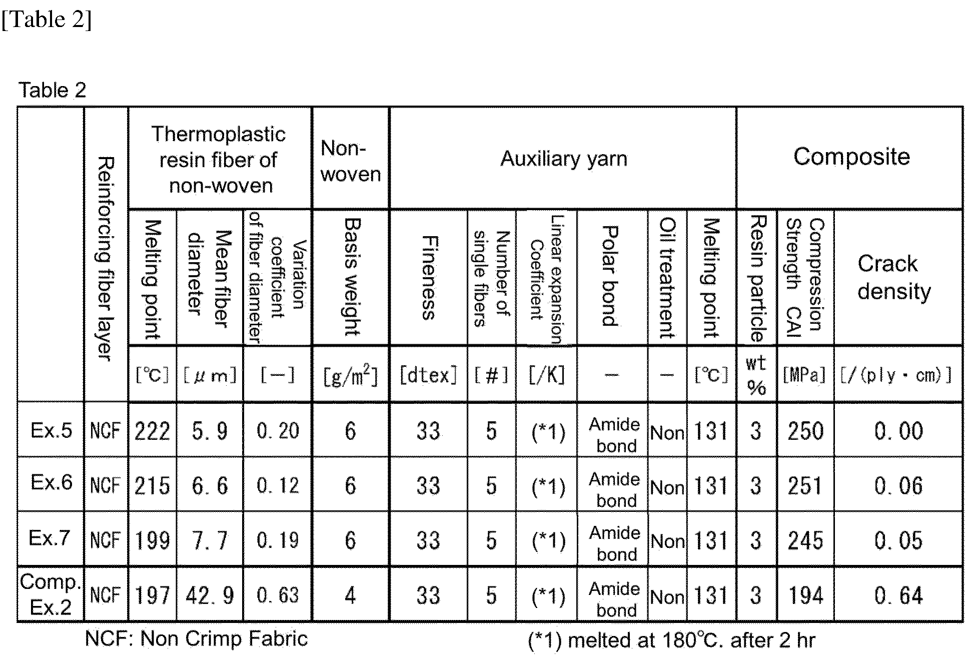

As can be seen in Table 2, in Examples 5 to 7 in which the mean fiber diameters of the thermoplastic resin fibers constituting the nonwoven fabrics were 5.9 µm to 7.7 µm, the occurrence of microcracks was reduced and better impact resistance of the composites was obtained as compared with Comparative Example 2 in which the mean fiber diameter was 42.9 µm.

The results show that even when the melting point of thermoplastic resin fibers constituting a nonwoven fabric is relatively high, the effect of reducing microcracks can be obtained by reducing the fiber diameter of the thermoplastic resin fibers constituting the nonwoven fabric, and also it is possible to obtain the effect of improving the impact resistance of a composite.

### <<Example 8 and Comparative Examples 3 and 4>>

In Example 8 and Comparative Examples 3 and 4, stitch yarns having a relatively poor microcrack resistance were used.

### Example 8

In Example 8, a reinforcing fiber substrate and a carbon-fiber-reinforced resin composite material were produced and evaluated in the same manner as in Example 5, except that the nonwoven fabric B-1 was used instead of the nonwoven fabric B-5 and the stitch yarn A-5 was used instead of the stitch yarn A-1. The evaluation results are shown in Table 3 below.

### Comparative Example 3

In Comparative Example 3, a reinforcing fiber substrate and a carbon-fiber-reinforced resin composite material were produced and evaluated in the same manner as in Example 8, except that the nonwoven fabric B-8 was used instead of the nonwoven fabric B-1. The evaluation results are shown in Table 3 below.

### Comparative Example 4

In Comparative Example 4, a reinforcing fiber substrate and a carbon-fiber-reinforced resin composite material were produced and evaluated in the same manner as in Example 8, except that the nonwoven fabric B-9 was used instead of the nonwoven fabric B-1. The evaluation results are shown in Table 3 below.

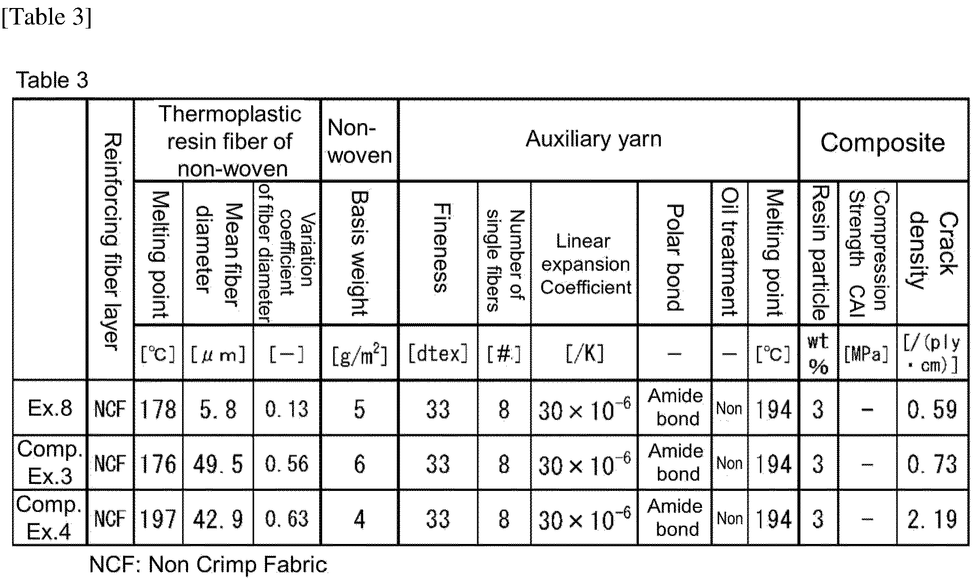

The stitched yarn A-5 used in Example 8 and Comparative Examples 3 and 4 had a relatively higher melting point. It is considered that when such a stitch yarn is used, the stitch yarn tends to retain its shape without being melted in a composite material, and therefore, the microcracks relatively easily occur due to the separation at the interface between the stitch yarn and a matrix resin. As can be seen in Table 3, when the stitch yarn A-5 was used, microcracks increased as compared to a case where a stitch yarn having a relatively lower melting point was used (e.g., Example 1).

However, even in such a case, when a small-diameter thermoplastic resin fiber having a single fiber diameter of 5.8 µm was used as a resin fiber constituting a nonwoven fabric (Example 8), the occurrence of microcracks was reduced as compared to a case where a thermoplastic resin fiber having a fiber diameter of 49.5 µm or 42.9 µm was used as a resin fiber constituting a nonwoven fabric (Comparative Example 3 or Comparative Example 4). In Comparative Example 4, a nonwoven fabric comprising thermoplastic resin fibers having a relatively high melting point was used.

However, the degree of reduction of microcracks in Example 8 in comparison with Comparative Example 3 was smaller than a case where a stitch yarn having better performance was used (for example, the degree of reduction of microcracks observed when Example 1 and Comparative Example 1 are compared). Without wishing to be bound by theory, it is considered that, when a stitch yarn having a relatively poor microcrack resistance is used, microcracks tends to occur due to the stitch yarn, and thus the occurrence of microcracks caused by the nonwoven fabric is relatively reduced, and consequently the effect of selecting the fiber diameter of thermoplastic resin fibers constituting a nonwoven fabric is relatively difficult to be observed.

### < <Example 9 to Example 15 > >

In Examples 9 to 15, conditions such as the properties of a stitch yarn, addition of an oil agent to a stitch yarn, and addition of resin particles were changed.

### Example 9

In Example 9, a reinforcing fiber substrate and a carbon-fiber-reinforced resin-composite material were produced and evaluated in the same manner as in Example 8, except that the stitch yarn A-2 was used instead of the stitch yarn A-5. The evaluation results are shown in Table 4 below.

### Example 10

In Example 10, a reinforcing fiber substrate and a carbon-fiber-reinforced resin composite material were produced and evaluated in the same manner as in Example 8, except that the stitch yarn A-3 was used instead of the stitch yarn A-5. The evaluation results are shown in Table 4 below.

### Example 11

In Example 11, a reinforcing fiber substrate and a carbon-fiber-reinforced resin composite material were produced and evaluated in the same manner as in Example 8, except that the stitch yarn A-3 was used instead of the stitch yarn A-5 and the stitch yarn was treated with an oil agent. The evaluation results are shown in Table 4 below. In the oil agent treatment, the above-described oil agent 1 was used.

### Example 12

In Example 12, a reinforcing fiber substrate and a carbon-fiber-reinforced resin composite material were produced and evaluated in the same manner as in Example 8, except that the stitch yarn A-4 was used instead of the stitch-yarn A-5.
The evaluation results are shown in Table 4 below.

### Example 13

In Example 13, a reinforcing fiber substrate and a carbon-fiber-reinforced resin composite material were manufactured and evaluated in the same manner as in Example 8, except that the stitch yarn A-1 was used instead of the stitch yarn A-5 and resin particles were not added at the time of manufacturing the composite. In Example 13, in the production of the carbon-fiber-reinforced resin composites, the matrix resin C-2 was used as a liquid thermosetting resin instead of the above-described matrix resin C-1. The evaluation results are shown in Table 4 below.

### Example 14

In Example 14, a reinforcing fiber substrate and a carbon-fiber-reinforced resin composite material were produced and evaluated in the same manner as in Example 8, except that the stitch yarn A-6 was used instead of the stitch yarn A-5. The evaluation results are shown in Table 4 below.

### Example 15

In Example 15, a reinforcing fiber substrate and a carbon-fiber-reinforced resin-composite material were produced and evaluated in the same manner as in Example 8, except that the stitch yarn A-7 was used instead of the stitch yarn A-5 and a bundle of three stitch yarns were used. The evaluation results are shown in Table 4 below.

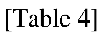

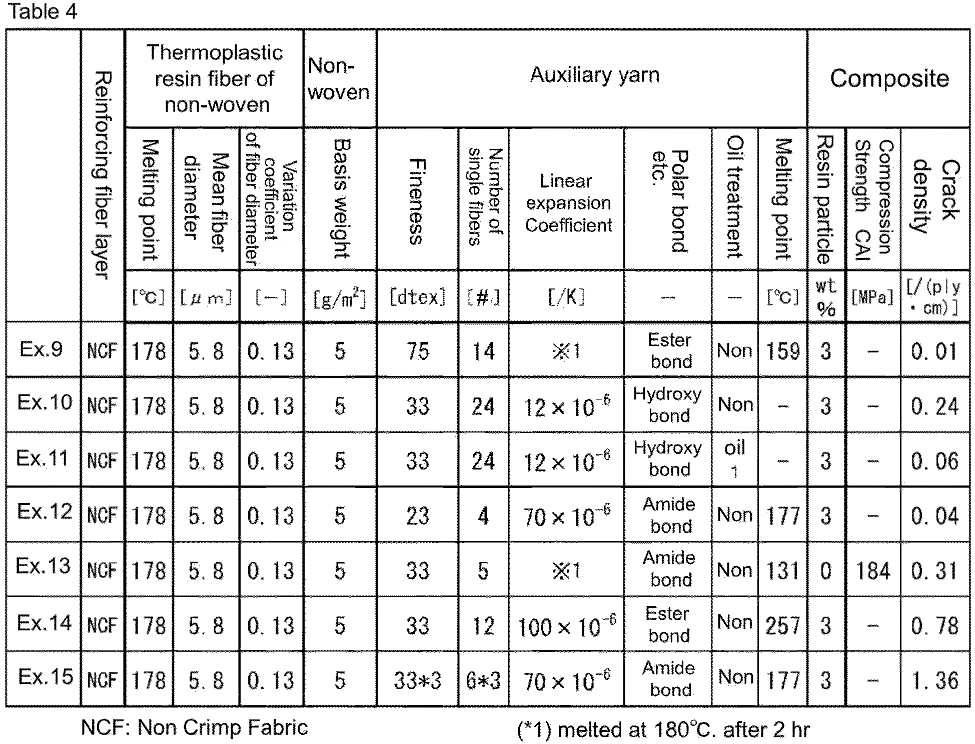

As can be seen from Table 4, in Examples 9 to 13, it was confirmed that the occurrence of cracks was satisfactorily suppressed. It is considered that, in these examples, since the fiber diameters of the thermoplastic resin fibers of the nonwoven fabrics were relatively small (5.8µm) and the microcrack resistance of the stitch yarns as auxiliary yarns was relatively good, the occurrence of cracks was suppressed.

On the other hand, in the composites according to Examples 14 and 15, the occurrence of microcracks was relatively high. It is considered that since the stitch yarn according to Example 14 had a melting point of 257°C and a relatively high coefficient of linear expansion, microcrack resistance was relatively poor. Further, it is considered that since the stitch yarn according to Example 15 had a relatively high total fineness, the micro-crack resistance is relatively poor. However, it is considered that since a thermoplastic resin fiber having a relatively small diameter was used in Examples 14 and 15, the occurrence of microcracks were suppressed as compared to a case where a thermoplastic resin fiber having a relatively large diameter was used.

Further, from Table 4 above, the effect of reducing cracks by an oil agent treatment of a stitch yarn can be seen. Namely, in Example 11 in which the stitch yarn treated with the oil agent 1 was used, a better microcrack density was observed than in the case of Example 10 in which a stitch yarn not treated with an oil agent was used. Note that an epoxy group is introduced into the stitch yarn via the oil agent 1.

Further, from Table 4 above, the effect of suppressing microcracks by use of resin particles can also be seen. Namely, the stitch yarn A-1 and the nonwoven fabric B-1 used in Example 13 have excellent microcrack resistance, as can be understood from Examples 5 to 7 using the stitch yarn A-1 and from Examples 9 to 12 using the nonwoven fabric B-1. Therefore, it would be expected that crack densities of about 0.00 to 0.10 cracks/(cm-ply) will be observed when the stitch-yarn A-1 and the nonwoven B-1 are used in combination. However, in Example 13, the crack density was relatively high, which was 0.31 cracks/(cm·ply). Example 13, unlike the other examples (in particular Examples 5-7 and Examples 9-12, etc.), did not comprise resin particles, and therefore the results show that it is possible to obtain a microcrack suppressing effect by blending resin particles in a matrix resin composing a fiber-reinforced composite material. Note that the mean particle diameter of the resin particles was 0.11 µm when measured in accordance with the above-described method for measuring the mean particle diameter of resin particles contained in a matrix resin.

### [Explanation of Reference numerals]

- 10, 30:: reinforcing fiber substrate
- 40:: non-crimp fabric
- 22, 42:: reinforcing fiber
- 24,44:: auxiliary yarn
- L:: direction
- 110, 310, 312, 314, 316:: resin material layer
- 130, 330, 340, 350:: reinforcing fiber layer

## Claims

1. A reinforcing fiber substrate, comprising:
one or more reinforcing fiber layers comprising reinforcing fibers,
one or more resin material layers comprising thermoplastic resin fibers, and
an auxiliary yarn,
wherein the auxiliary yarn retains the integrity of the reinforcing fiber layer and/or the reinforcing fiber substrate by connecting the reinforcing fibers together and/or connecting the reinforcing fiber layers together, and
wherein the mean fiber diameter of the thermoplastic resin fibers is 0.5 µm to 35 µm.

2. The reinforcing fiber substrate according to claim 1, wherein the resin material layer is made of a nonwoven fabric comprising thermoplastic resin fibers.

3. The reinforcing fiber substrate according to claim 1 or 2, wherein the thermoplastic resin fiber has a melting point in a range of 130°C to 230°C.

4. The reinforcing fiber substrate according to any one of claim 1 to 3, wherein the thermoplastic resin fibers are fibers of polyamide resin, polyester resin, polyethersulfone (PES) resin, or polyetherimide (PEI) resin.

5. The reinforcing fiber substrate according to any one of claim 1 to 4, wherein the reinforcing fiber layer is a unidirectional woven fabric comprising the reinforcing fibers as warp yarns aligned in one direction and the auxiliary yarns as weft yarns.

6. The reinforcing fiber substrate according to any one of claims 1 to 5, wherein the reinforcing fiber substrate comprises at least two reinforcing fiber layers stacked on top of each other, the at least two reinforcing fiber layers are each composed of the reinforcing fibers aligned in one direction, and the at least two reinforcing fiber layers are stitched together by a stitch yarn as the auxiliary yarn.

7. The reinforcing fiber substrate according to claim 6, wherein an extending direction of the reinforcing fibers constituting one of the at least two reinforcing fiber layers is different from an extending direction of the reinforcing fibers constituting the other one of the reinforcing fiber layers.

8. The reinforcing fiber substrate according to any one of claim 1 to 7, wherein the one or more resin material layers are each disposed on a surface of one of the reinforcing fiber layers.

9. The reinforcing fiber substrate of any one of claim 1 to 8, wherein at least one of the resin material layers is disposed between two of the reinforcing fiber layers.

10. The reinforcing fiber substrate according to any one of claim 1 to 9, wherein the auxiliary yarn as a stitching yarn has a fineness of 1 to 75 dtex and/or has 1 to 50 filaments.

11. The reinforcing fiber substrate according to any one of claim 1 to 10, wherein the auxiliary yarn is made of a resin fiber having a melting point of 80°C to 185°C.

12. The reinforcing fiber substrate according to any one of claim 1 to 11, wherein the auxiliary yarn comprises a fiber of polyamide resin, polyester resin, polyethersulfone (PES) resin, or polyetherimide (PEI) resin.

13. The reinforcing fiber substrate according to any one of claim 1 to 12, wherein the auxiliary yarn comprises a compound having at least one selected from a group consisting of a hydroxyl group, an amino group, a phenol group, a lactam group and an epoxy group, and an amide bond and an ester bond.

14. The reinforcing fiber substrate according to any one of claim 1 to 13, wherein the auxiliary yarn is an auxiliary yarn which melts when heated at 180°C for 2 hours, or the coefficient of linear expansion of the auxiliary yarn in the fiber axial direction after being heated at 180°C for 2 hours and cooled is -1×10⁻⁶ to 80×10⁻⁶/K.

15. A preform material, comprising the reinforcing fiber substrate according to any one of claim 1 to 14 and a binder resin, wherein the binder resin is 1 to 20 parts by mass with respect to 100 parts by mass of the reinforcing fiber substrate.

16. A method for producing a preform material, comprising:
heating a composite, which comprises the reinforcing fiber substrate according to any one of claim 1 to 14 and a binder resin, under pressure.

17. A fiber-reinforced resin composite material, comprising the reinforcing fiber substrate according to any one of claims 1 to 14 and a matrix resin impregnated in the reinforcing fiber substrate.

18. A method for producing a fiber-reinforced composite material, comprising impregnating the reinforcing fiber substrate according to any one of claims 1 to 14 with a matrix resin.
